# EUROPEAN PATENT SPECIFICATION

(11) **EP 2 973 514 B1**
(45) Date of publication and mention of the grant of the patent: **15.12.2021**
(21) Application number: 14720221.2
(22) Date of filing: 11.03.2014
(51) Int. Cl.: G09B 19/24

(54) **SYSTEM AND METHOD PROVIDING COMBINED VIRTUAL REALITY ARC WELDING AND THREE-DIMENSIONAL (3D) VIEWING**
SYSTEM UND VERFAHREN FÜR KOMBINIERTES VIRTUAL-REALITY-LICHTBOGENSCHWEISSEN UND DREIDIMENSIONALE (3D)-ANSICHT
SYSTÈME ET PROCÉDÉ RÉALISANT UN SOUDAGE À L'ARC DE RÉALITÉ VIRTUELLE ET UNE VISUALISATION TRIDIMENSIONNELLE (3D) COMBINÉS

(30) Priority: 11.03.2013 US 201313792288
(43) Date of publication of application: 20.01.2016
(73) Proprietor: Lincoln Global, Inc., Santa Fe Springs, CA 90670 (US)
(72) Inventor: PETERS, Carl, Solon, Ohio 44139 (US); WALLACE, Matthew Wayne, South Windsor, CT 06074 (US)
(74) Representative: Grosse Schumacher Knauer von Hirschhausen
(86) International application number: PCT/IB2014/000289
(87) International publication number: WO 2014/140722

(56) References cited:
- WO-A1-2012/137060
- US-A1- 2011 183 304
- US-A1- 2014 065 584

## Description

This U.S. patent application claims priority to and is a continuation-in-part (CIP) patent application of pending U.S. patent application serial number 12/501,257 filed on July 10, 2009.

### FIELD OF THE INVENTION

The invention is related to a system for providing arc welding training according to claim 1 and to a method for providing arc welding training according to claim 4. Certain embodiments relate to virtual reality simulation. More particularly, certain embodiments relate to systems and methods for providing arc welding training in a simulated virtual reality environment or augmented reality environment using real-time weld puddle feedback and three-dimensional (3D) data in a stereoscopic 3D transmission format.

### TECHNICAL BACKGROUND

Learning how to arc weld traditionally takes many hours of instruction, training, and practice. There are many different types of arc welding and arc welding processes that can be learned. Typically, welding is learned by a student using a real welding system and performing welding operations on real metal pieces. Such real-world training can tie up scarce welding resources and use up limited welding materials. Recently, however, the idea of training using welding simulations has become more popular. Some welding simulations are implemented via personal computers and/or on-line via the Internet. However, current known welding simulations tend to be limited in their training focus. For example, some welding simulations focus on training only for "muscle memory", which simply trains a welding student how to hold and position a welding tool. Other welding simulations focus on showing visual and audio effects of the welding process, but only in a limited and often unrealistic manner which does not provide the student with the desired feedback that is highly representative of real world welding. It is this actual feedback that directs the student to make necessary adjustments to make a good weld. Welding is learned by watching the arc and/or puddle, not by muscle memory. Document US20110183304 discloses an arc welding simulation that provides simulation of virtual destructive and non-destructive testing and inspection of virtual weldments for training purposes.

Further limitations and disadvantages of conventional, traditional, and proposed approaches will become apparent to one of skill in the art, through comparison of such approaches with embodiments of the present invention as set forth in the remainder of the present application with reference to the drawings.

### DESCRIPTION OF THE INVENTION

It is an object of the invention to overcome the herein mentioned limitations and disadvantages. This problem is solved by a system for providing arc welding training according to claim 1 and by a method for providing arc welding training according to 4. Further embodiments of the invention are subject of the subclaims.

These and other features of the claimed invention, as well as details of illustrated embodiments thereof, will be more fully understood from the following description and drawings.

### BRIEF DESCRIPTION OF THE DRAWINGS

Fig. 1 illustrates a first example embodiment of a system block diagram of a system providing arc welding training in a real-time virtual reality environment;
Fig. 2 illustrates an example embodiment of a combined simulated welding console and observer display device (ODD) of the system of Fig. 1;
Fig. 3 illustrates an example embodiment of the observer display device (ODD) of Fig. 2;
Fig. 4 illustrates an example embodiment of a front portion of the simulated welding console of Fig. 2 showing a physical welding user interface (WUI);
Fig. 5 illustrates an example embodiment of a mock welding tool (MWT) of the system of Fig. 1;
Fig. 6 illustrates an example embodiment of a table/stand (T/S) of the system of Fig. 1;
Fig. 7A illustrates an example embodiment of a pipe welding coupon (WC) of the system of Fig. 1;
Fig. 7B illustrates the pipe WC of Fig. 7A mounted in an arm of the table/stand (TS) of Fig. 6;
Fig. 8 illustrates various elements of an example embodiment of the spatial tracker (ST) of Fig. 1;
Fig. 9A illustrates an example embodiment of a face-mounted display device (FMDD) of the system of Fig. 1;
Fig. 9B is an illustration of how the FMDD of Fig. 9A is secured on the head of a user;
Fig. 9C illustrates an example embodiment of the FMDD of Fig. 9A mounted within a welding helmet;
Fig. 10 illustrates an example embodiment of a subsystem block diagram of a programmable processor-based subsystem (PPS) of the system of Fig. 1;
Fig. 11 illustrates an example embodiment of a block diagram of a graphics processing unit (GPU) of the PPS of Fig. 10;
Fig. 12 illustrates an example embodiment of a functional block diagram of the system of Fig. 1;
Fig. 13 is a flow chart of an embodiment of a method of training using the virtual reality training system of Fig. 1;
Figs. 14A-14B illustrate the concept of a welding pixel (wexel) displacement map, in accordance with an embodiment of the present invention;
Fig. 15 illustrates an example embodiment of a coupon space and a weld space of a flat welding coupon (WC) simulated in the system of Fig. 1;
Fig. 16 illustrates an example embodiment of a coupon space and a weld space of a corner (tee joint) welding coupon (WC) simulated in the system of Fig. 1;
Fig. 17 illustrates an example embodiment of a coupon space and a weld space of a pipe welding coupon (WC) simulated in the system of Fig. 1;
Fig. 18 illustrates an example embodiment of the pipe welding coupon (WC) of Fig. 17;
Figs. 19A-19C illustrate an example embodiment of the concept of a dual-displacement puddle model of the system of Fig. 1;
Fig. 20 illustrates a second example embodiment of a system block diagram of a system providing arc welding training in a real-time virtual reality environment; and
Fig. 21 illustrates an example embodiment of a system block diagram of a system providing stereoscopic 3D viewing of virtual elements generated as part of a virtual welding environment using the system of Fig. 20.

### DETAILED DESCRIPTION

An embodiment of the present invention comprises a virtual reality arc welding (VRAW) system comprising a programmable processor-based subsystem, a spatial tracker operatively connected to the programmable processor-based subsystem, at least one mock welding tool capable of being spatially tracked by the spatial tracker, and at least one display device operatively connected to the programmable processor-based subsystem. The system is capable of simulating, in a virtual reality space, a weld puddle having real-time molten metal fluidity and heat dissipation characteristics. The system is also capable of displaying the simulated weld puddle on the display device in real-time. The real-time molten metal fluidity and heat dissipation characteristics of the simulated weld puddle provide real-time visual feedback to a user of the mock welding tool when displayed, allowing the user to adjust or maintain a welding technique in real-time in response to the real-time visual feedback (i.e., helps the user learn to weld correctly). The displayed weld puddle is representative of a weld puddle that would be formed in the real-world based on the user's welding technique and the selected welding process and parameters. By viewing a puddle (e.g., shape, color, slag, size, stacked dimes), a user can modify his technique to make a good weld and determine the type of welding being done. The shape of the puddle is responsive to the movement of the gun or stick. As used herein, the term "real-time" means perceiving and experiencing in time in a simulated environment in the same way that a user would perceive and experience in a real-world welding scenario. Furthermore, the weld puddle is responsive to the effects of the physical environment including gravity, allowing a user to realistically practice welding in various positions including overhead welding and various pipe welding angles (e.g., 1G, 2G, 5G, 6G). As used herein, the term "virtual weldment" refers to a simulated welded part that exists in virtual reality space. For example, a simulated welding coupon that has been virtually welded as described herein is an example of a virtual weldment.

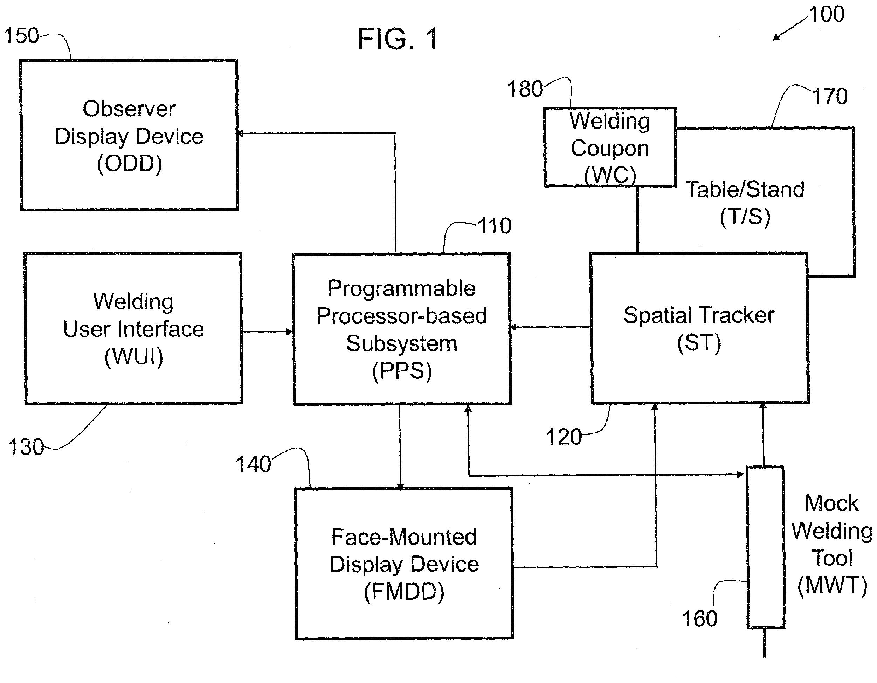

Fig. 1 illustrates an example embodiment of a system block diagram of a system **100** providing arc welding training in a real-time virtual reality environment. The system **100** includes a programmable processor-based subsystem (PPS) **110.** The system **100** further includes a spatial tracker (ST) **120** operatively connected to the PPS **110.** The system **100** also includes a physical welding user interface (WUI) **130** operatively connected to the PPS **110** and a face-mounted display device (FMDD) **140** operatively connected to the PPS **110** and the ST **120.** The system **100** further includes an observer display device (ODD) **150** operatively connected to the PPS **110.** The system **100** also includes at least one mock welding tool (MWT) **160** operatively connected to the ST **120** and the PPS **110.** The system **100** further includes a table/stand (T/S) **170** and at least one welding coupon (WC) **180** capable of being attached to the T/S **170.** In accordance with an alternative embodiment of the present invention, a mock gas bottle is provided (not shown) simulating a source of shielding gas and having an adjustable flow regulator.

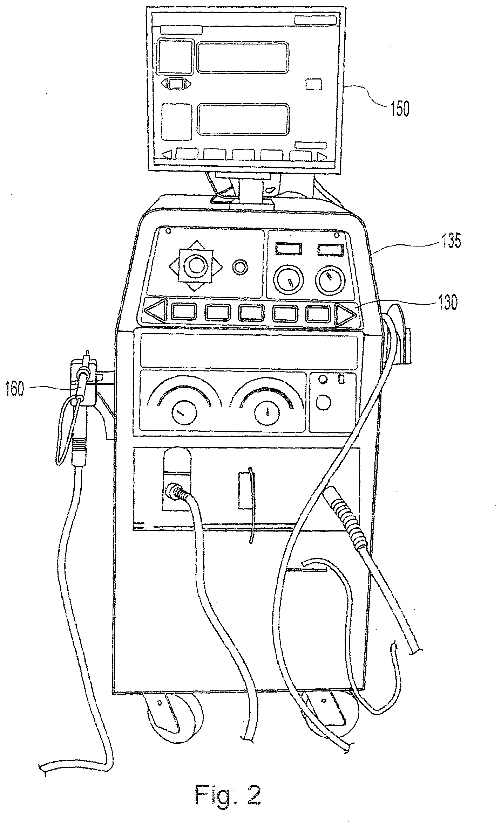

Fig. 2 illustrates an example embodiment of a combined simulated welding console **135** (simulating a welding power source user interface) and observer display device (ODD) **150** of the system **100** of Fig. 1. The physical WUI **130** resides on a front portion of the console **135** and provides knobs, buttons, and a joystick for user selection of various modes and functions. The ODD **150** is attached to a top portion of the console **135.** The MWT **160** rests in a holder attached to a side portion of the console **135.** Internally, the console **135** holds the PPS **110** and a portion of the ST **120.**

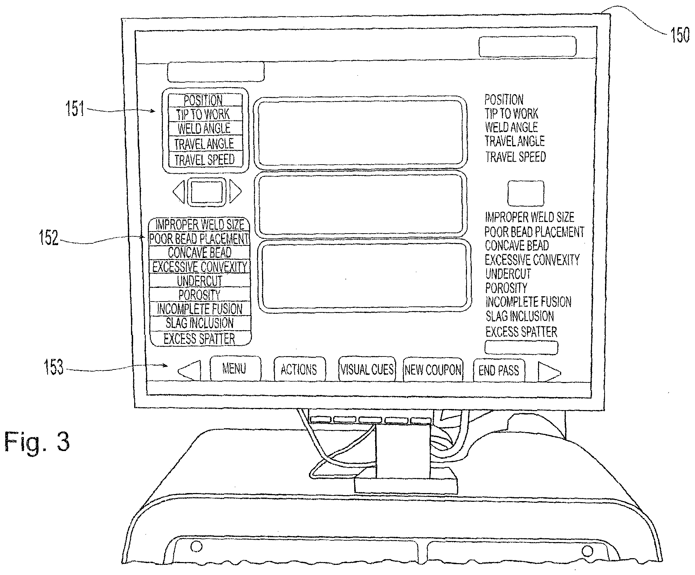

Fig. 3 illustrates an example embodiment of the observer display device (ODD) **150** of Fig. 2. In accordance with an embodiment of the present invention, the ODD **150** is a liquid crystal display (LCD) device. Other display devices are possible as well. For example, the ODD **150** may be a touchscreen display, in accordance with another embodiment of the present invention. The ODD **150** receives video (e.g., SVGA format) and display information from the PPS **110.**

As shown in Fig. 3, the ODD **150** is capable of displaying a first user scene showing various welding parameters **151** including position, tip to work, weld angle, travel angle, and travel speed. These parameters may be selected and displayed in real time in graphical form and are used to teach proper welding technique. Furthermore, as shown in Fig. 3, the ODD **150** is capable of displaying simulated welding discontinuity states **152** including, for example, improper weld size, poor bead placement, concave bead, excessive convexity, undercut, porosity, incomplete fusion, slag inclusion, excess spatter, overfill, and burnthrough (melt through). Undercut is a groove melted into the base metal adjacent to the weld or weld root and left unfilled by weld metal. Undercut is often due to an incorrect angle of welding. Porosity is cavity type discontinuities formed by gas entrapment during solidification often caused by moving the arc too far away from the coupon.

Also, as shown in Fig. 3, the ODD **150** is capable of displaying user selections **153** including menu, actions, visual cues, new coupon, and end pass. These user selections are tied to user buttons on the console **135**. As a user makes various selections via, for example, a touchscreen of the ODD **150** or via the physical WUI 130, the displayed characteristics can change to provide selected information and other options to the user. Furthermore, the ODD **150** may display a view seen by a welder wearing the FMDD **140** at the same angular view of the welder or at various different angles, for example, chosen by an instructor. The ODD **150** may be viewed by an instructor and/or students for various training purposes. For example, the view may be rotated around the finished weld allowing visual inspection by an instructor. In accordance with an alternate embodiment of the present invention, video from the system **100** may be sent to a remote location via, for example, the Internet for remote viewing and/or critiquing. Furthermore, audio may be provided, allowing real-time audio communication between a student and a remote instructor.

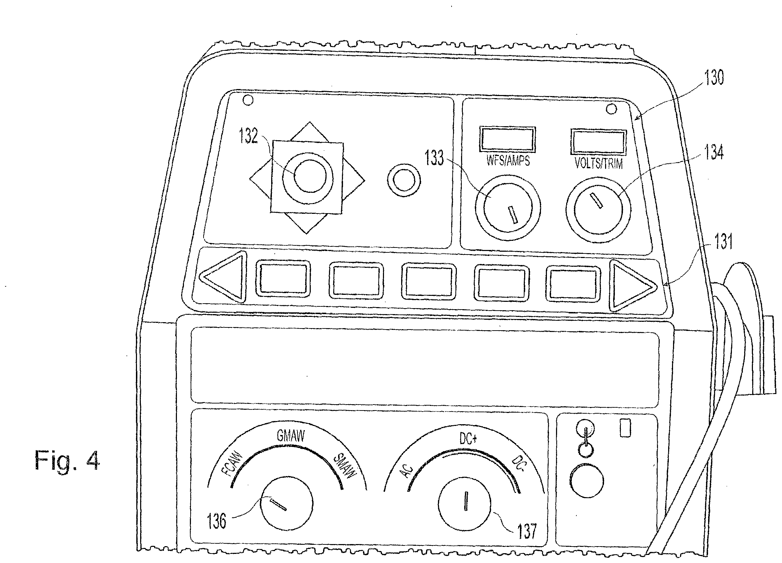

Fig. 4 illustrates an example embodiment of a front portion of the simulated welding console **135** of Fig. 2 showing a physical welding user interface (WUI) **130**. The WUI **130** includes a set of buttons **131** corresponding to the user selections **153** displayed on the ODD **150.** The buttons **131** are colored to correspond to the colors of the user selections **153** displayed on the ODD **150.** When one of the buttons **131** is pressed, a signal is sent to the PPS **110** to activate the corresponding function. The WUI **130** also includes a joystick **132** capable of being used by a user to select various parameters and selections displayed on the ODD **150.** The WUI **130** further includes a dial or knob **133** for adjusting wire feed speed/amps, and another dial or knob **134** for adjusting volts/trim. The WUI **130** also includes a dial or knob **136** for selecting an arc welding process. In accordance with an embodiment of the present invention, three arc welding processes are selectable including flux cored arc welding (FCAW) including gas-shielded and self-shielded processes; gas metal arc welding (GMAW) including short arc, axial spray, STT, and pulse; gas tungsten arc welding (GTAW); and shielded metal arc welding (SMAW) including E6010 and E7010 electrodes. The WUI **130** further includes a dial or knob **137** for selecting a welding polarity. In accordance with an embodiment of the present invention, three arc welding polarities are selectable including alternating current (AC), positive direct current (DC+), and negative direct current (DC-).

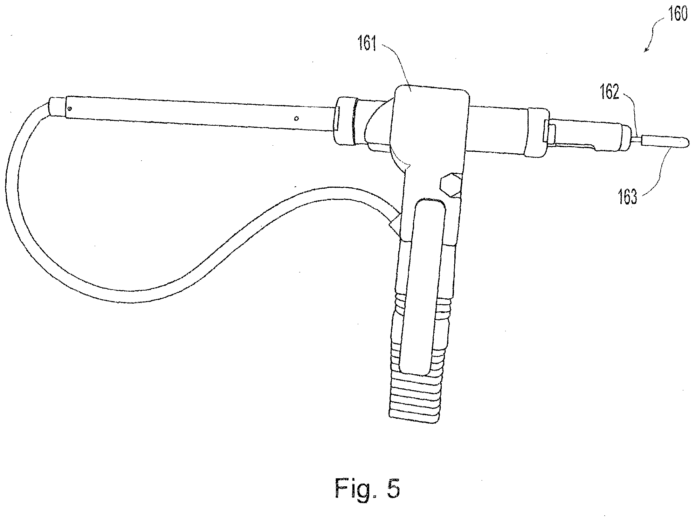

Fig. 5 illustrates an example embodiment of a mock welding tool (MWT) **160** of the system **100** of Fig. 1. The MWT **160** of Fig. 5 simulates a stick welding tool for plate and pipe welding and includes a holder **161** and a simulated stick electrode **162.** A trigger on the MWD **160** is used to communicate a signal to the PPS **110** to activate a selected simulated welding process. The simulated stick electrode **162** includes a tactilely resistive tip **163** to simulate resistive feedback that occurs during, for example, a root pass welding procedure in real-world pipe welding or when welding a plate. If the user moves the simulated stick electrode **162** too far back out of the root, the user will be able to feel or sense the lower resistance, thereby deriving feedback for use in adjusting or maintaining the current welding process.

It is contemplated that the stick welding tool may incorporate an actuator, not shown, that withdraws the simulated stick electrode **162** during the virtual welding process. That is to say that as a user engages in virtual welding activity, the distance between holder **161** and the tip of the simulated stick electrode **162** is reduced to simulate consumption of the electrode. The consumption rate, i.e. withdrawal of the stick electrode **162,** may be controlled by the PPS **110** and more specifically by coded instructions executed by the PPS **110.** The simulated consumption rate may also depend on the user's technique. It is noteworthy to mention here that as the system **100** facilitates virtual welding with different types of electrodes, the consumption rate or reduction of the stick electrode **162** may change with the welding procedure used and/or setup of the system **100.**

Other mock welding tools are possible as well, in accordance with other embodiments of the present invention, including a MWD that simulates a hand-held semiautomatic welding gun having a wire electrode fed through the gun, for example. Furthermore, in accordance with other certain embodiments of the present invention, a real welding tool could be used as the MWT **160** to better simulate the actual feel of the tool in the user's hands, even though, in the system **100,** the tool would not be used to actually create a real arc. Also, a simulated grinding tool may be provided, for use in a simulated grinding mode of the simulator **100.** Similarly, a simulated cutting tool may be provided, for use in a simulated cutting mode of the simulator **100.** Furthermore, a simulated gas tungsten arc welding (GTAW) torch or filler material may be provided for use in the simulator **100.**

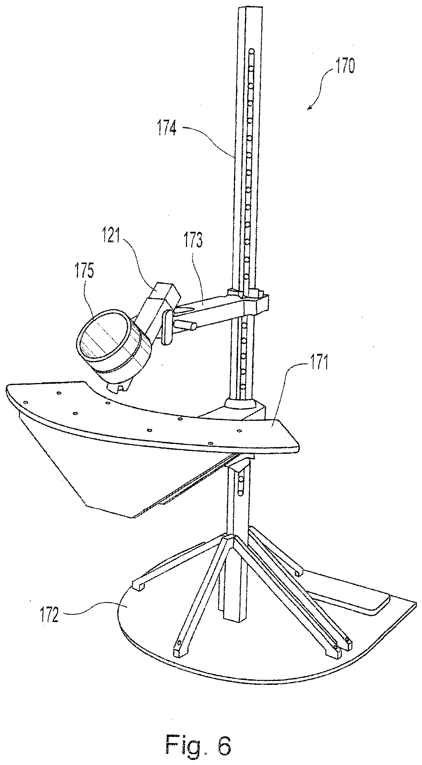

Fig. 6 illustrates an example embodiment of a table/stand (T/S) **170** of the system **100** of Fig. 1. The T/S **170** includes an adjustable table **171,** a stand or base **172,** an adjustable arm **173,** and a vertical post **174.** The table **171,** the stand **172,** and the arm **173** are each attached to the vertical post **174.** The table **171** and the arm **173** are each capable of being manually adjusted upward, downward, and rotationally with respect to the vertical post **174.** The arm **173** is used to hold various welding coupons (e.g., welding coupon **175**) and a user may rest his/her arm on the table **171** when training. The vertical post **174** is indexed with position information such that a user may know exactly where the arm **173** and the table **171** are vertically positioned on the post **171.** This vertical position information may be entered into the system by a user using the WUI **130** and the ODD **150.**

In accordance with an alternative embodiment of the present invention, the positions of the table **171** and the arm **173** may be automatically set by the PSS **110** via preprogrammed settings, or via the WUI **130** and/or the ODD **150** as commanded by a user. In such an alternative embodiment, the T/S **170** includes, for example, motors and/or servo-mechanisms, and signal commands from the PPS **110** activate the motors and/or servo-mechanisms. In accordance with a further alternative embodiment of the present invention, the positions of the table **171** and the arm **173** and the type of coupon are detected by the system **100.** In this way, a user does not have to manually input the position information via the user interface. In such an alternative embodiment, the T/S **170** includes position and orientation detectors and sends signal commands to the PPS **110** to provide position and orientation information, and the WC **175** includes position detecting sensors (e.g., coiled sensors for detecting magnetic fields). A user is able to see a rendering of the T/S **170** adjust on the ODD **150** as the adjustment parameters are changed, in accordance with an embodiment of the present invention.

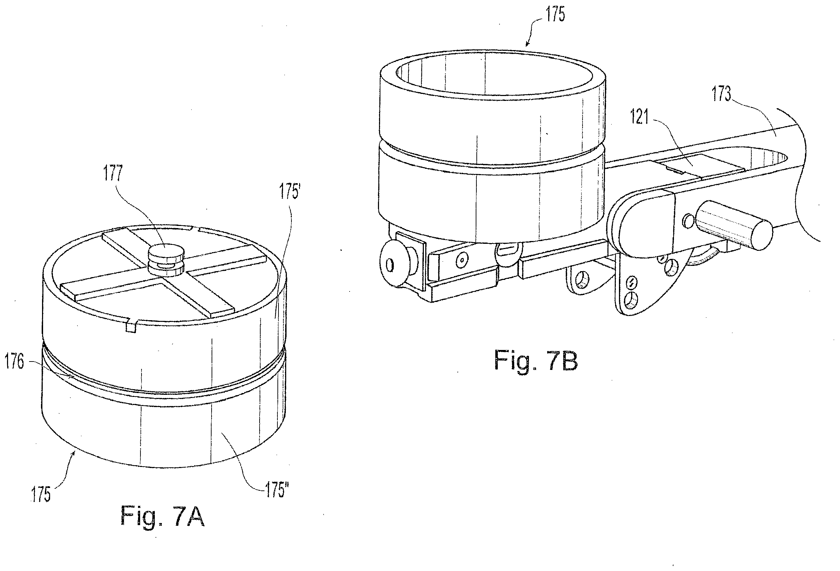

Fig. 7A illustrates an example embodiment of a pipe welding coupon (WC) **175** of the system **100** of Fig. 1. The WC **175** simulates two six inch diameter pipes **175'** and **175"** placed together to form a root **176** to be welded. The WC **175** includes a connection portion **177** at one end of the WC **175,** allowing the WC **175** to be attached in a precise and repeatable manner to the arm **173.** Fig. 7B illustrates the pipe WC **175** of Fig. 7A mounted on the arm **173** of the table/stand (TS) **170** of Fig. 6. The precise and repeatable manner in which the WC **175** is capable of being attached to the arm **173** allows for spatial calibration of the WC **175** to be performed only once at the factory. Then, in the field, as long as the system **100** is told the position of the arm **173,** the system **100** is able to track the MWT **160** and the FMDD **140** with respect to the WC **175** in a virtual environment. A first portion of the arm **173,** to which the WC **175** is attached, is capable of being tilted with respect to a second portion of the arm **173,** as shown in Fig. 6. This allows the user to practice pipe welding with the pipe in any of several different orientations and angles.

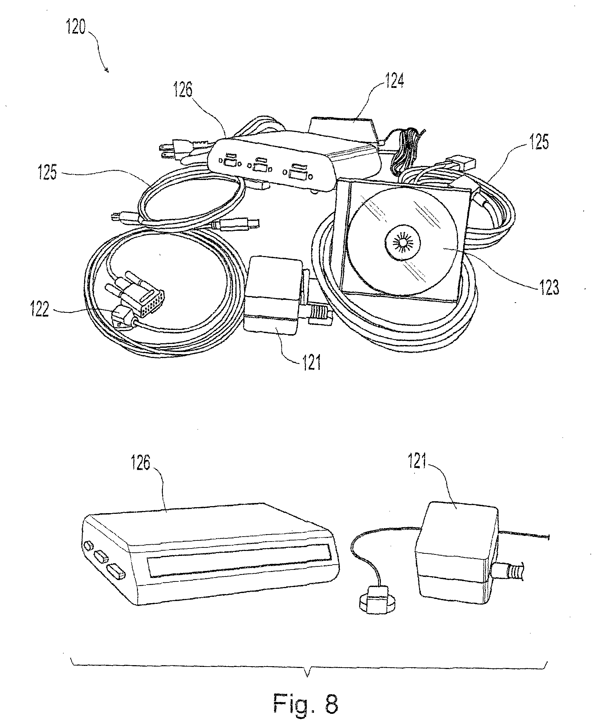

Fig. 8 illustrates various elements of an example embodiment of the spatial tracker (ST) **120** of Fig. 1. The ST **120** is a magnetic tracker that is capable of operatively interfacing with the PPS **110** of the system **100.** The ST **120** includes a magnetic source **121** and source cable, at least one sensor **122** and associated cable, host software on disk **123,** a power source **124** and associated cable, USB and RS-232 cables **125,** and a processor tracking unit **126.** The magnetic source **121** is capable of being operatively connected to the processor tracking unit **126** via a cable. The sensor **122** is capable of being operatively connected to the processor tracking unit **126** via a cable. The power source **124** is capable of being operatively connected to the processor tracking unit **126** via a cable. The processor tracking unit **126** is cable of being operatively connected to the PPS **110** via a USB or RS-232 cable **125.** The host software on disk **123** is capable of being loaded onto the PPS **110** and allows functional communication between the ST **120** and the PPS **110.**

Referring to Fig. 6, the magnetic source **121** of the ST **120** is mounted on the first portion of the arm **173.** The magnetic source **121** creates a magnetic field around the source **121,** including the space encompassing the WC **175** attached to the arm **173,** which establishes a 3D spatial frame of reference. The T/S **170** is largely non-metallic (non-ferric and non-conductive) so as not to distort the magnetic field created by the magnetic source **121.** The sensor **122** includes three induction coils orthogonally aligned along three spatial directions. The induction coils of the sensor **122** each measure the strength of the magnetic field in each of the three directions and provide that information to the processor tracking unit **126.** As a result, the system **100** is able to know where any portion of the WC **175** is with respect to the 3D spatial frame of reference established by the magnetic field when the WC **175** is mounted on the arm **173.** The sensor **122** may be attached to the MWT **160** or to the FMDD **140,** allowing the MWT **160** or the FMDD **140** to be tracked by the ST **120** with respect to the 3D spatial frame of reference in both space and orientation. When two sensors **122** are provided and operatively connected to the processor tracking unit **126,** both the MWT **160** and the FMDD **140** may be tracked. In this manner, the system **100** is capable of creating a virtual WC, a virtual MWT, and a virtual T/S in virtual reality space and displaying the virtual WC, the virtual MWT, and the virtual T/S on the FMDD **140** and/or the ODD **150** as the MWT **160** and the FMDD **140** are tracked with respect to the 3D spatial frame of reference.

In accordance with an alternative embodiment of the present invention, the sensor(s) **122** may wirelessly interface to the processor tracking unit **126**, and the processor tracking unit **126** may wirelessly interface to the PPS **110**. In accordance with other alternative embodiments of the present invention, other types of spatial trackers **120** may be used in the system **100** including, for example, an accelerometer/gyroscope-based tracker, an optical tracker (active or passive), an infrared tracker, an acoustic tracker, a laser tracker, a radio frequency tracker, an inertial tracker, and augmented reality based tracking systems. Other types of trackers may be possible as well.

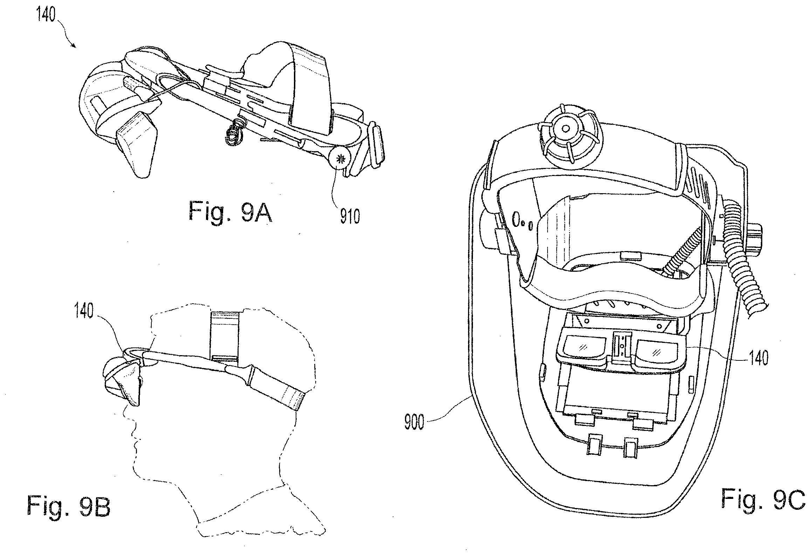

Fig. 9A illustrates an example embodiment of the face-mounted display device **140** (FMDD) of the system **100** of Fig. 1. Fig. 9B is an illustration of how the FMDD **140** of Fig. 9A is secured on the head of a user. Fig. 9C illustrates an example embodiment of the FMDD **140** of Fig. 9A integrated into a welding helmet **900.** The FMDD **140** operatively connects to the PPS **110** and the ST **120** either via wired means or wirelessly. A sensor **122** of the ST **120** may be attached to the FMDD **140** or to the welding helmet **900,** in accordance with various embodiments of the present invention, allowing the FMDD **140** and/or welding helmet **900** to be tracked with respect to the 3D spatial frame of reference created by the ST **120.**

In accordance with an embodiment of the present invention, the FMDD **140** includes two high-contrast SVGA 3D OLED microdisplays capable of delivering fluid full-motion video in the 2D and frame sequential video modes. Video of the virtual reality environment is provided and displayed on the FMDD **140.** A zoom (e.g., 2X) mode may be provided, allowing a user to simulate a cheater lens, for example.

The FMDD **140** further includes two earbud speakers **910,** allowing the user to hear simulated welding-related and environmental sounds produced by the system **100.** The FMDD **140** may operatively interface to the PPS **110** via wired or wireless means, in accordance with various embodiments of the present invention. In accordance with an embodiment of the present invention, the PPS **110** provides stereoscopic video to the FMDD **140,** providing enhanced depth perception to the user. In accordance with an alternate embodiment of the present invention, a user is able to use a control on the MWT **160** (e.g., a button or switch) to call up and select menus and display options on the FMDD **140.** This may allow the user to easily reset a weld if he makes a mistake, change certain parameters, or back up a little to re-do a portion of a weld bead trajectory, for example.

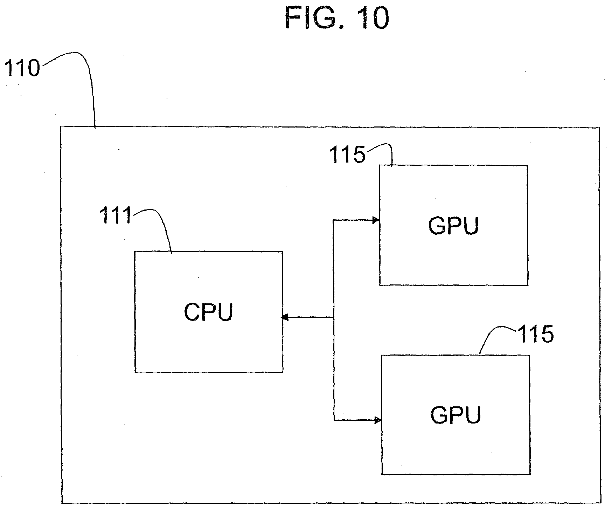

Fig. 10 illustrates an example embodiment of a subsystem block diagram of the programmable processor-based subsystem (PPS) **110** of the system **100** of Fig. 1. The PPS **110** includes a central processing unit (CPU) **111** and two graphics processing units (GPU) **115,** in accordance with an embodiment of the present invention. The two GPUs 115 are programmed to provide virtual reality simulation of a weld puddle (a.k.a. a weld pool) having real-time molten metal fluidity and heat absorption and dissipation characteristics, in accordance with an embodiment of the present invention.

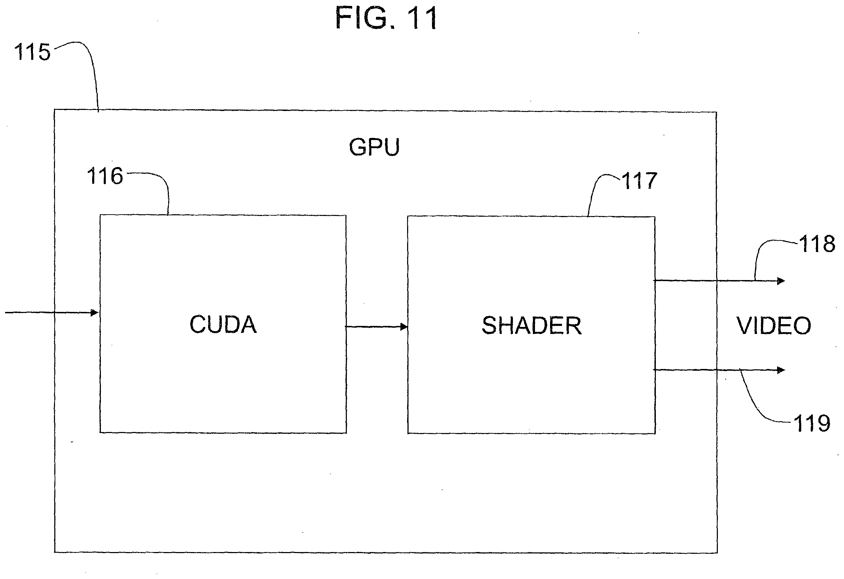

Fig. 11 illustrates an example embodiment of a block diagram of a graphics processing unit (GPU) **115** of the PPS **110** of Fig. 10. Each GPU **115** supports the implementation of data parallel algorithms. In accordance with an embodiment of the present invention, each GPU **115** provides two video outputs **118** and **119** capable of providing two virtual reality views. Two of the video outputs may be routed to the FMDD **140,** rendering the welder's point of view, and a third video output may be routed to the ODD **150,** for example, rendering either the welder's point of view or some other point of view. The remaining fourth video output may be routed to a projector, for example. Both GPUs **115** perform the same welding physics computations but may render the virtual reality environment from the same or different points of view. The GPU **115** includes a compute unified device architecture (CUDA) **116** and a shader **117.** The CUDA **116** is the computing engine of the GPU **115** which is accessible to software developers through industry standard programming languages. The CUDA **116** includes parallel cores and is used to run the physics model of the weld puddle simulation described herein. The CPU **111** provides real-time welding input data to the CUDA **116** on the GPU **115.** The shader **117** is responsible for drawing and applying all of the visuals of the simulation. Bead and puddle visuals are driven by the state of a wexel displacement map which is described later herein. In accordance with an embodiment of the present invention, the physics model runs and updates at a rate of about 30 times per second.

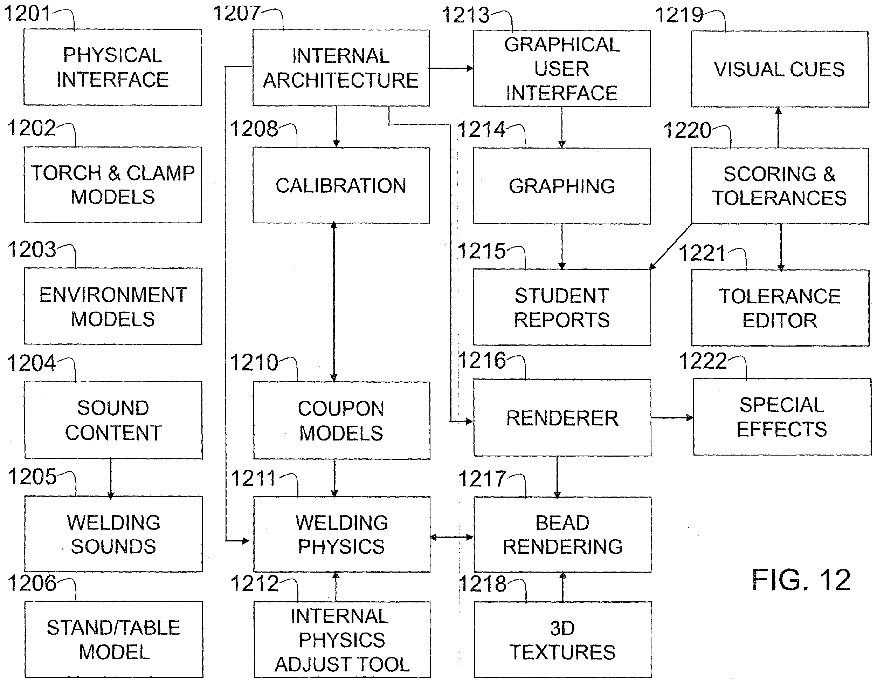

Fig. 12 illustrates an example embodiment of a functional block diagram of the system **100** of Fig. 1. The various functional blocks of the system **100** as shown in Fig. 12 are implemented largely via software instructions and modules running on the PPS **110.** The various functional blocks of the system **100** include a physical interface **1201,** torch and clamp models **1202,** environment models **1203,** sound content functionality **1204,** welding sounds **1205,** stand/table model **1206,** internal architecture functionality **1207,** calibration functionality **1208,** coupon models **1210,** welding physics **1211,** internal physics adjustment tool (tweaker) **1212,** graphical user interface functionality **1213,** graphing functionality **1214,** student reports functionality **1215,** renderer **1216,** bead rendering **1217,** 3D textures **1218,** visual cues functionality **1219,** scoring and tolerance functionality **1220,** tolerance editor **1221,** and special effects **1222.**

The internal architecture functionality **1207** provides the higher level software logistics of the processes of the system **100** including, for example, loading files, holding information, managing threads, turning the physics model on, and triggering menus. The internal architecture functionality **1207** runs on the CPU **111,** in accordance with an embodiment of the present invention. Certain real-time inputs to the PPS **110** include arc location, gun position, FMDD or helmet position, gun on/off state, and contact made state (yes/no).

The graphical user interface functionality **1213** allows a user, through the ODD **150** using the joystick **132** of the physical user interface **130,** to set up a welding scenario. In accordance with an embodiment of the present invention, the set up of a welding scenario includes selecting a language, entering a user name, selecting a practice plate (i.e., a welding coupon), selecting a welding process (e.g., FCAW, GMAW, SMAW) and associated axial spray, pulse, or short arc methods, selecting a gas type and flow rate, selecting a type of stick electrode (e.g., 6010 or 7018), and selecting a type of flux cored wire (e.g., self-shielded, gas-shielded) . The set up of a welding scenario also includes selecting a table height, an arm height, an arm position, and an arm rotation of the T/S **170.** The set up of a welding scenario further includes selecting an environment (e.g., a background environment in virtual reality space), setting a wire feed speed, setting a voltage level, setting an amperage, selecting a polarity, and turning particular visual cues on or off.

During a simulated welding scenario, the graphing functionality **1214** gathers user performance parameters and provides the user performance parameters to the graphical user interface functionality **1213** for display in a graphical format (e.g., on the ODD **150**). Tracking information from the ST **120** feeds into the graphing functionality **1214.** The graphing functionality **1214** includes a simple analysis module (SAM) and a whip/weave analysis module (WWAM). The SAM analyzes user welding parameters including welding travel angle, travel speed, weld angle, position, and tip to work distance by comparing the welding parameters to data stored in bead tables. The WWAM analyzes user whipping parameters including dime spacing, whip time, and puddle time. The WWAM also analyzes user weaving parameters including width of weave, weave spacing, and weave timing. The SAM and WWAM interpret raw input data (e.g., position and orientation data) into functionally usable data for graphing. For each parameter analyzed by the SAM and the WWAM, a tolerance window is defined by parameter limits around an optimum or ideal set point input into bead tables using the tolerance editor **1221,** and scoring and tolerance functionality **1220** is performed.

The tolerance editor **1221** includes a weldometer which approximates material usage, electrical usage, and welding time. Furthermore, when certain parameters are out of tolerance, welding discontinuities (i.e., welding defects) may occur. The state of any welding discontinuities are processed by the graphing functionality **1214** and presented via the graphical user interface functionality **1213** in a graphical format. Such welding discontinuities include improper weld size, poor bead placement, concave bead, excessive convexity, undercut, porosity, incomplete fusion, slag entrapment, overfill, burnthrough, and excessive spatter. In accordance with an embodiment of the present invention, the level or amount of a discontinuity is dependent on how far away a particular user parameter is from the optimum or ideal set point.

Different parameter limits may be pre-defined for different types of users such as, for example, welding novices, welding experts, and persons at a trade show. The scoring and tolerance functionality **1220** provide number scores depending on how close to optimum (ideal) a user is for a particular parameter and depending on the level of discontinuities or defects present in the weld. The optimum values are derived from real-world data. Information from the scoring and tolerance functionality **1220** and from the graphics functionality **1214** may be used by the student reports functionality **1215** to create a performance report for an instructor and/or a student.

The system **100** is capable of analyzing and displaying the results of virtual welding activity. By analyzing the results, it is meant that system **100** is capable of determining when during the welding pass and where along the weld joints, the user deviated from the acceptable limits of the welding process. A score may be attributed to the user's performance. In one embodiment, the score may be a function of deviation in position, orientation and speed of the mock welding tool **160** through ranges of tolerances, which may extend from an ideal welding pass to marginal or unacceptable welding activity. Any gradient of ranges may be incorporated into the system **100** as chosen for scoring the user's performance. Scoring may be displayed numerically or alpha-numerically. Additionally, the user's performance may be displayed graphically showing, in time and/or position along the weld joint, how closely the mock welding tool traversed the weld joint. Parameters such as travel angle, work angle, speed, and distance from the weld joint are examples of what may be measured, although any parameters may be analyzed for scoring purposes. The tolerance ranges of the parameters are taken from real-world welding data, thereby providing accurate feedback as to how the user will perform in the real world. In another embodiment, analysis of the defects corresponding to the user's performance may also be incorporated and displayed on the ODD **150.** In this embodiment, a graph may be depicted indicating what type of discontinuity resulted from measuring the various parameters monitored during the virtual welding activity. While occlusions may not be visible on the ODD **150,** defects may still have occurred as a result of the user's performance, the results of which may still be correspondingly displayed, i.e. graphed.

Visual cues functionality **1219** provide immediate feedback to the user by displaying overlaid colors and indicators on the FMDD **140** and/or the ODD **150.** Visual cues are provided for each of the welding parameters **151** including position, tip to work distance, weld angle, travel angle, travel speed, and arc length (e.g., for stick welding) and visually indicate to the user if some aspect of the user's welding technique should be adjusted based on the predefined limits or tolerances. Visual cues may also be provided for whip/weave technique and weld bead "dime" spacing, for example. Visual cues may be set independently or in any desired combination.

Calibration functionality **1208** provides the capability to match up physical components in real world space (3D frame of reference) with visual components in virtual reality space. Each different type of welding coupon (WC) is calibrated in the factory by mounting the WC to the arm **173** of the T/S **170** and touching the WC at predefined points (indicated by, for example, three dimples on the WC) with a calibration stylus operatively connected to the ST **120.** The ST **120** reads the magnetic field intensities at the predefined points, provides position information to the PPS **110,** and the PPS **110** uses the position information to perform the calibration (i.e., the translation from real world space to virtual reality space).

Any particular type of WC fits into the arm **173** of the T/S **170** in the same repeatable way to within very tight tolerances. Therefore, once a particular WC type is calibrated, that WC type does not have to be re-calibrated (i.e., calibration of a particular type of WC is a one-time event). WCs of the same type are interchangeable. Calibration ensures that physical feedback perceived by the user during a welding process matches up with what is displayed to the user in virtual reality space, making the simulation seem more real. For example, if the user slides the tip of a MWT **160** around the corner of a actual WC **180,** the user will see the tip sliding around the corner of the virtual WC on the FMDD **140** as the user feels the tip sliding around the actual corner. In accordance with an embodiment of the present invention, the MWT **160** is placed in a pre-positioned jig and is calibrated as well, based on the known jig position.

In accordance with an alternative embodiment of the present invention, "smart" coupons are provided, having sensors on, for example, the corners of the coupons. The ST **120** is able to track the corners of a "smart" coupon such that the system **100** continuously knows where the "smart" coupon is in real world 3D space. In accordance with a further alternative embodiment of the present invention, licensing keys are provided to "unlock" welding coupons. When a particular WC is purchased, a licensing key is provided allowing the user to enter the licensing key into the system **100,** unlocking the software associated with that WC. In accordance with another embodiment of the present invention, special non-standard welding coupons may be provided based on real-world CAD drawings of parts. Users may be able to train on welding a CAD part even before the part is actually produced in the real world.

Sound content functionality **1204** and welding sounds **1205** provide particular types of welding sounds that change depending on if certain welding parameters are within tolerance or out of tolerance. Sounds are tailored to the various welding processes and parameters. For example, in a MIG spray arc welding process, a crackling sound is provided when the user does not have the MWT **160** positioned correctly, and a hissing sound is provided when the MWT **160** is positioned correctly. In a short arc welding process, a steady crackling or frying sound is provided for proper welding technique, and a hissing sound may be provided when undercutting is occurring. These sounds mimic real world sounds corresponding to correct and incorrect welding technique.

High fidelity sound content may be taken from real world recordings of actual welding using a variety of electronic and mechanical means, in accordance with various embodiments of the present invention. In accordance with an embodiment of the present invention, the perceived volume and directionality of sound is modified depending on the position, orientation, and distance of the user's head (assuming the user is wearing a FMDD **140** that is tracked by the ST **120**) with respect to the simulated arc between the MWT **160** and the WC **180.** Sound may be provided to the user via ear bud speakers **910** in the FMDD **140** or via speakers configured in the console **135** or T/S **170,** for example.

Environment models **1203** are provided to provide various background scenes (still and moving) in virtual reality space. Such background environments may include, for example, an indoor welding shop, an outdoor race track, a garage, etc. and may include moving cars, people, birds, clouds, and various environmental sounds. The background environment may be interactive, in accordance with an embodiment of the present invention. For example, a user may have to survey a background area, before starting welding, to ensure that the environment is appropriate (e.g., safe) for welding. Torch and clamp models 1202 are provided which model various MWTs **160** including, for example, guns, holders with stick electrodes, etc. in viruatl reality space.

Coupon models **1210** are provided which model various WCs **180** including, for example, flat plate coupons, T-joint coupons, butt-joint coupons, groove-weld coupons, and pipe coupons (e.g., 2-inch diameter pipe and 6-inch diameter pipe) in virtual reality space. A stand/table model **1206** is provided which models the various parts of the T/S **170** including an adjustable table **171,** a stand **172,** an adjustable arm **173,** and a vertical post **174** in virtual reality space. A physical interface model **1201** is provided which models the various parts of the welding user interface **130,** console **135,** and ODD **150** in virtual reality space.

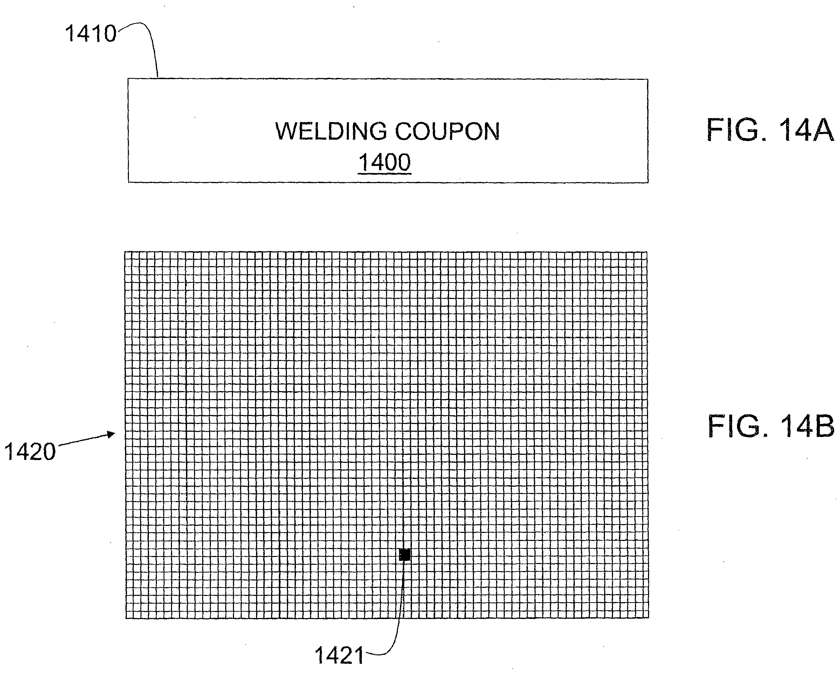

In accordance with an embodiment of the present invention, simulation of a weld puddle or pool in virtual reality space is accomplished where the simulated weld puddle has real-time molten metal fluidity and heat dissipation characteristics. At the heart of the weld puddle simulation is the welding physics functionality **1211** (a.k.a., the physics model) which is run on the GPUs **115,** in accordance with an embodiment of the present invention. The welding physics functionality employs a double displacement layer technique to accurately model dynamic fluidity/viscosity, solidity, heat gradient (heat absorption and dissipation), puddle wake, and bead shape, and is described in more detail herein with respect to Figs. 14A-14C.

The welding physics functionality **1211** communicates with the bead rendering functionality **1217** to render a weld bead in all states from the heated molten state to the cooled solidified state. The bead rendering functionality **1217** uses information from the welding physics functionality **1211** (e.g., heat, fluidity, displacement, dime spacing) to accurately and realistically render a weld bead in virtual reality space in real-time. The 3D textures functionality **1218** provides texture maps to the bead rendering functionality **1217** to overlay additional textures (e.g., scorching, slag, grain) onto the simulated weld bead. For example, slag may be shown rendered over a weld bead during and just after a welding process, and then removed to reveal the underlying weld bead. The renderer functionality **1216** is used to render various non-puddle specific characteristics using information from the special effects module **1222** including sparks, spatter, smoke, arc glow, fumes and gases, and certain discontinuities such as, for example, undercut and porosity.

The internal physics adjustment tool **1212** is a tweaking tool that allows various welding physics parameters to be defined, updated, and modified for the various welding processes. In accordance with an embodiment of the present invention, the internal physics adjustment tool **1212** runs on the CPU **111** and the adjusted or updated parameters are downloaded to the GPUs **115.** The types of parameters that may be adjusted via the internal physics adjustment tool **1212** include parameters related to welding coupons, process parameters that allow a process to be changed without having to reset a welding coupon (allows for doing a second pass), various global parameters that can be changed without resetting the entire simulation, and other various parameters.

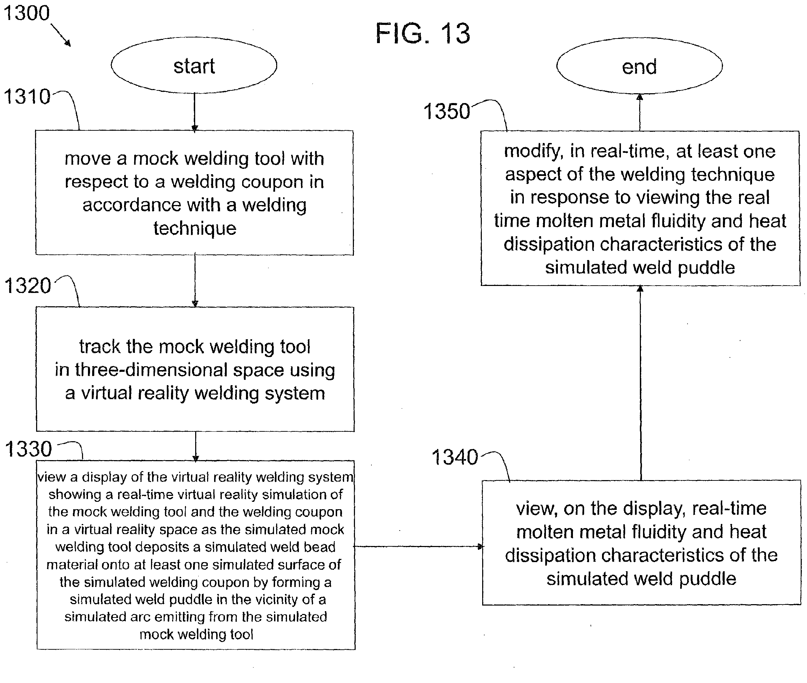

Fig. 13 is a flow chart of an embodiment of a method **1300** of training using the virtual reality training system **100** of Fig. 1. In step **1310,** move a mock welding tool with respect to a welding coupon in accordance with a welding technique. In step **1320,** track position and orientation of the mock welding tool in three-dimensional space using a virtual reality system. In step **1330,** view a display of the virtual reality welding system showing a real-time virtual reality simulation of the mock welding tool and the welding coupon in a virtual reality space as the simulated mock welding tool deposits a simulated weld bead material onto at least one simulated surface of the simulated welding coupon by forming a simulated weld puddle in the vicinity of a simulated arc emitting from said simulated mock welding tool. In step **1340,** view on the display, real-time molten metal fluidity and heat dissipation characteristics of the simulated weld puddle. In step **1350,** modify in real-time, at least one aspect of the welding technique in response to viewing the real-time molten metal fluidity and heat dissipation characteristics of the simulated weld puddle.

The method **1300** illustrates how a user is able to view a weld puddle in virtual reality space and modify his welding technique in response to viewing various characteristics of the simulated weld puddle, including real-time molten metal fluidity (e.g., viscosity) and heat dissipation. The user may also view and respond to other characteristics including real-time puddle wake and dime spacing. Viewing and responding to characteristics of the weld puddle is how most welding operations are actually performed in the real world. The double displacement layer modeling of the welding physics functionality **1211** run on the GPUs **115** allows for such real-time molten metal fluidity and heat dissipation characteristics to be accurately modeled and represented to the user. For example, heat dissipation determines solidification time (i.e., how much time it takes for a wexel to completely solidify).

Furthermore, a user may make a second pass over the weld bead material using the same or a different (e.g., a second) mock welding tool and/or welding process. In such a second pass scenario, the simulation shows the simulated mock welding tool, the welding coupon, and the original simulated weld bead material in virtual reality space as the simulated mock welding tool deposits a second simulated weld bead material merging with the first simulated weld bead material by forming a second simulated weld puddle in the vicinity of a simulated arc emitting from the simulated mock welding tool. Additional subsequent passes using the same or different welding tools or processes may be made in a similar manner. In any second or subsequent pass, the previous weld bead material is merged with the new weld bead material being deposited as a new weld puddle is formed in virtual reality space from the combination of any of the previous weld bead material, the new weld bead material, and possibly the underlying coupon material in accordance with certain embodiments of the present invention. Such subsequent passes may be needed to make a large fillet or groove weld, performed to repair a weld bead formed by a previous pass, for example, or may include a hot pass and one or more fill and cap passes after a root pass as is done in pipe welding. In accordance with various embodiments of the present invention, weld bead and base material may include mild steel, stainless steel, aluminum, nickel based alloys, or other materials.

Figs. 14A-14B illustrate the concept of a welding element (wexel) displacement map **1420,** in accordance with an embodiment of the present invention. Fig. 14A shows a side view of a flat welding coupon (WC) **1400** having a flat top surface **1410.** The welding coupon **1400** exists in the real world as, for example, a plastic part, and also exists in virtual reality space as a simulated welding coupon. Fig. 14B shows a representation of the top surface **1410** of the simulated WC **1400** broken up into a grid or array of welding elements (i.e., wexels) forming a wexel map **1420.** Each wexel (e.g., wexel **1421)** defines a small portion of the surface **1410** of the welding coupon. The wexel map defines the surface resolution. Changeable channel parameter values are assigned to each wexel, allowing values of each wexel to dynamically change in real-time in virtual reality weld space during a simulated welding process. The changeable channel parameter values correspond to the channels Puddle (molten metal fluidity/viscosity displacement), Heat (heat absorption/dissipation), Displacement (solid displacement), and Extra (various extra states, e.g., slag, grain, scorching, virgin metal). These changeable channels are referred to herein as PHED for Puddle, Heat, Extra, and Displacement, respectively.

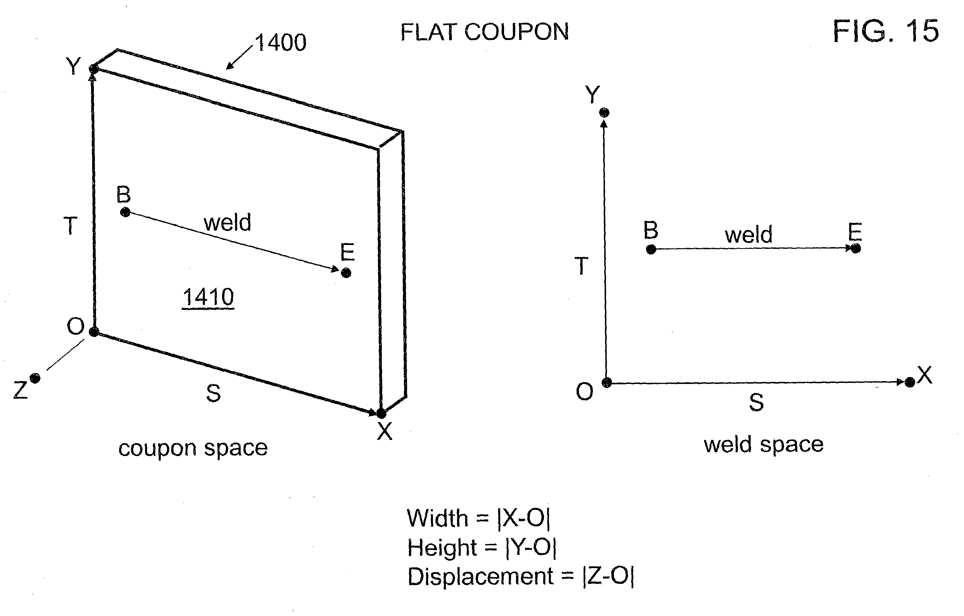

Fig. 15 illustrates an example embodiment of a coupon space and a weld space of the flat welding coupon (WC) **1400** of Fig. 14 simulated in the system **100** of Fig. 1. Points O, X, Y, and Z define the local 3D coupon space. In general, each coupon type defines the mapping from 3D coupon space to 2D virtual reality weld space. The wexel map **1420** of Fig. 14 is a two-dimensional array of values that map to weld space in virtual reality. A user is to weld from point B to point E as shown in Fig. 15. A trajectory line from point **B** to point E is shown in both 3D coupon space and 2D weld space in Fig. 15.

Each type of coupon defines the direction of displacement for each location in the wexel map. For the flat welding coupon of Fig. 15, the direction of displacement is the same at all locations in the wexel map (i.e., in the Z-direction). The texture coordinates of the wexel map are shown as **S, T** (sometimes called **U, V**) in both 3D coupon space and 2D weld space, in order to clarify the mapping. The wexel map is mapped to and represents the rectangular surface **1410** of the welding coupon 1400.

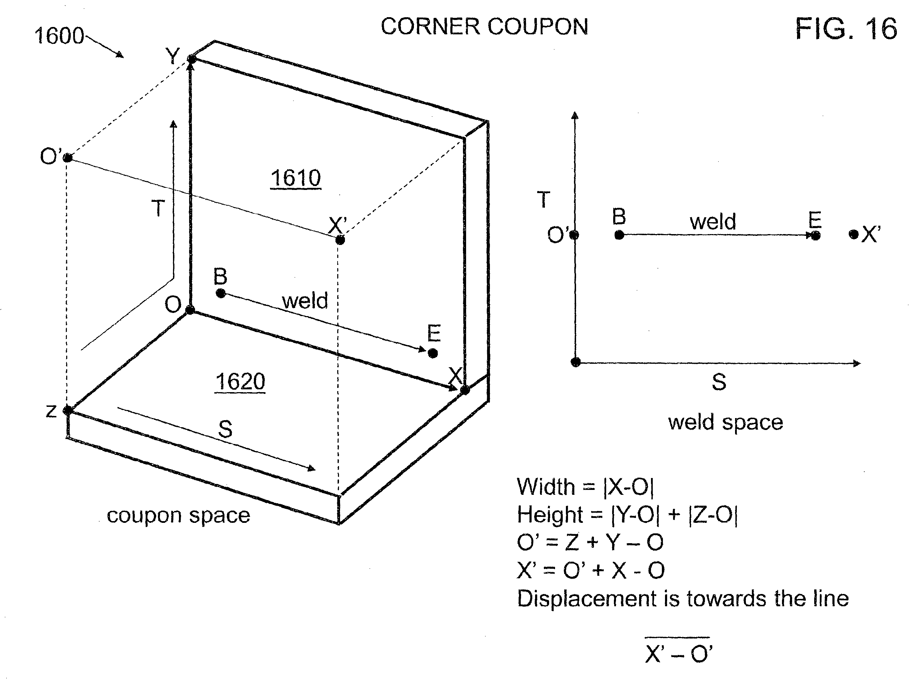

Fig. 16 illustrates an example embodiment of a coupon space and a weld space of a corner (tee joint) welding coupon (WC) **1600** simulated in the system **100** of Fig. 1. The corner WC **1600** has two surfaces 1610 and 1620 in 3D coupon space that are mapped to 2D weld space as shown in Fig. 16. Again, points **O, X, Y,** and **Z** define the local 3D coupon space. The texture coordinates of the wexel map are shown as **S, T** in both 3D coupon space and 2D weld space, in order to clarify the mapping. A user is to weld from point **B** to point **E** as shown in Fig. 16. A trajectory line from point **B** to point **E** is shown in both 3D coupon space and 2D weld space in Fig. 16. However, the direction of displacement is towards the line X'-O' as shown in the 3D coupon space, towards the opposite corner as shown in Fig. 16.

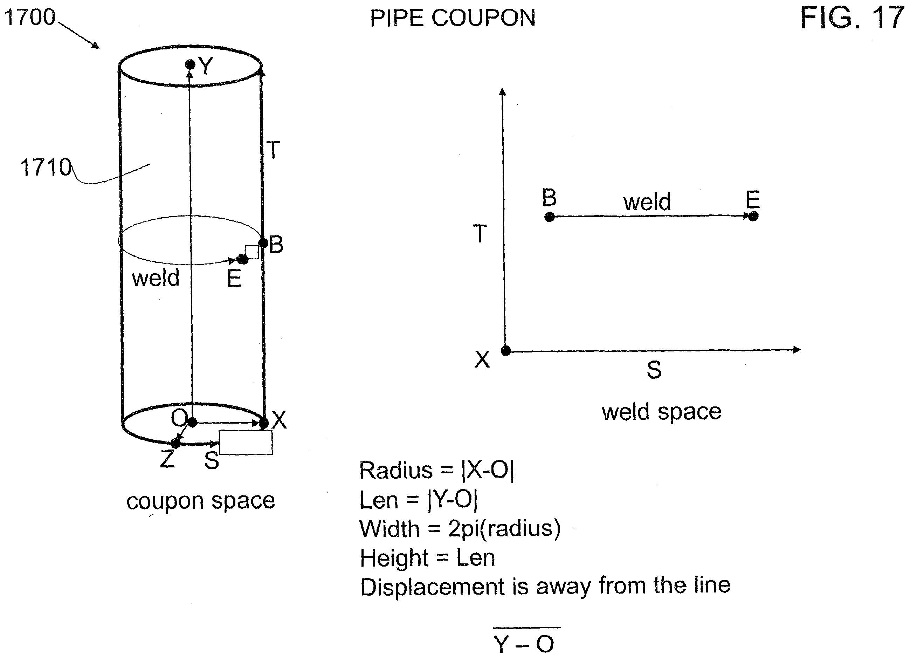

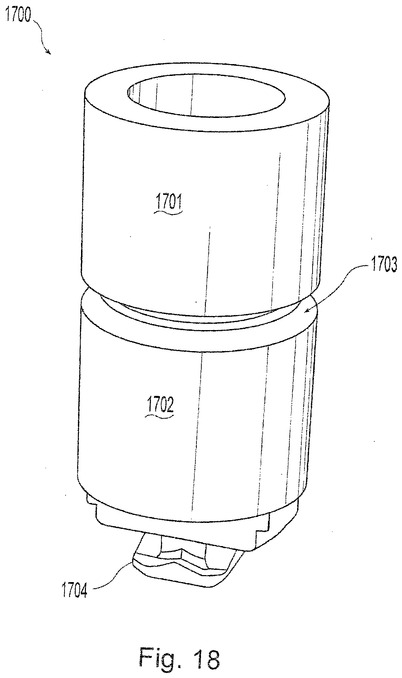

Fig. 17 illustrates an example embodiment of a coupon space and a weld space of a pipe welding coupon (WC) **1700** simulated in the system **100** of Fig. 1. The pipe WC **1700** has a curved surface **1710** in 3D coupon space that is mapped to 2D weld space as shown in Fig. 17. Again, points **O, X, Y,** and **Z** define the local 3D coupon space. The texture coordinates of the wexel map are shown as **S, T** in both 3D coupon space and 2D weld space, in order to clarify the mapping. A user is to weld from point B to point E along a curved trajectory as shown in Fig. 17. A trajectory curve and line from point **B** to point **E** is shown in 3D coupon space and 2D weld space, respectively, in Fig. 17. The direction of displacement is away from the line Y-O (i.e., away from the center of the pipe). Fig. 18 illustrates an example embodiment of the pipe welding coupon (WC) **1700** of Fig. 17. The pipe WC **1700** is made of a non-ferric, non-conductive plastic and simulates two pipe pieces **1701** and **1702** coming together to form a root joint **1703.** An attachment piece **1704** for attaching to the arm **173** of the T/S **170** is also shown.

In a similar manner that a texture map may be mapped to a rectangular surface area of a geometry, a weldable wexel map may be mapped to a rectangular surface of a welding coupon. Each element of the weldable map is termed a wexel in the same sense that each element of a picture is termed a pixel (a contraction of picture element). A pixel contains channels of information that define a color (e.g., red, green, blue, etc.). A wexel contains channels of information (e.g., P, H, E, D) that define a weldable surface in virtual reality space.

In accordance with an embodiment of the present invention, the format of a wexel is summarized as channels PHED (Puddle, Heat, Extra, Displacement) which contains four floating point numbers. The Extra channel is treated as a set of bits which store logical information about the wexel such as, for example, whether or not there is any slag at the wexel location. The Puddle channel stores a displacement value for any liquefied metal at the wexel location. The Displacement channel stores a displacement value for the solidified metal at the wexel location. The Heat channel stores a value giving the magnitude of heat at the wexel location. In this way, the weldable part of the coupon can show displacement due to a welded bead, a shimmering surface "puddle" due to liquid metal, color due to heat, etc. All of these effects are achieved by the vertex and pixel shaders applied to the weldable surface.

In accordance with an embodiment of the present invention, a displacement map and a particle system are used where the particles can interact with each other and collide with the displacement map. The particles are virtual dynamic fluid particles and provide the liquid behavior of the weld puddle but are not rendered directly (i.e., are not visually seen directly). Instead, only the particle effects on the displacement map are visually seen. Heat input to a wexel affects the movement of nearby particles. There are two types of displacement involved in simulating a welding puddle which include Puddle and Displacement. Puddle is "temporary" and only lasts as long as there are particles and heat present. Displacement is "permanent". Puddle displacement is the liquid metal of the weld which changes rapidly (e.g., shimmers) and can be thought of as being "on top" of the Displacement. The particles overlay a portion of a virtual surface displacement map (i.e., a wexel map). The Displacement represents the permanent solid metal including both the initial base metal and the weld bead that has solidified.

In accordance with an embodiment of the present invention, the simulated welding process in virtual reality space works as follows: Particles stream from the emitter (emitter of the simulated MWT 160) in a thin cone. The particles make first contact with the surface of the simulated welding coupon where the surface is defined by a wexel map. The particles interact with each other and the wexel map and build up in real-time. More heat is added the nearer a wexel is to the emitter. Heat is modeled in dependence on distance from the arc point and the amount of time that heat is input from the arc. Certain visuals (e.g., color, etc.) are driven by the heat. A weld puddle is drawn or rendered in virtual reality space for wexels having enough heat. Wherever it is hot enough, the wexel map liquefies, causing the Puddle displacement to "raise up" for those wexel locations. Puddle displacement is determined by sampling the "highest" particles at each wexel location. As the emitter moves on along the weld trajectory, the wexel locations left behind cool. Heat is removed from a wexel location at a particular rate. When a cooling threshold is reached, the wexel map solidifies. As such, the Puddle displacement is gradually converted to Displacement (i.e., a solidified bead). Displacement added is equivalent to Puddle removed such that the overall height does not change. Particle lifetimes are tweaked or adjusted to persist until solidification is complete. Certain particle properties that are modeled in the system **100** include attraction/repulsion, velocity (related to heat), dampening (related to heat dissipation), direction (related to gravity).

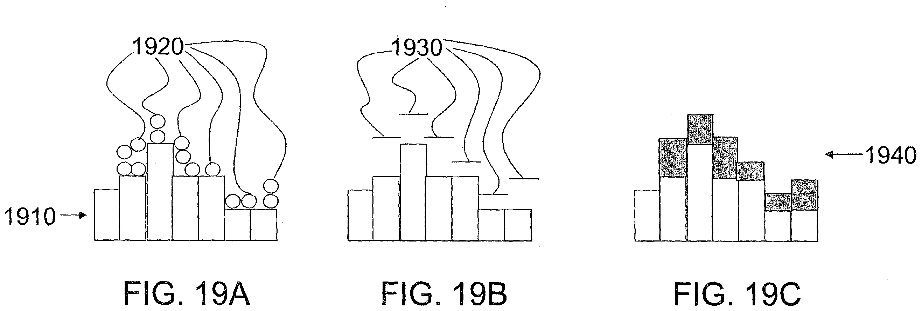

Figs. 19A-19C illustrate an example embodiment of the concept of a dual-displacement (displacement and particles) puddle model of the system **100** of Fig. 1. Welding coupons are simulated in virtual reality space having at least one surface. The surfaces of the welding coupon are simulated in virtual reality space as a double displacement layer including a solid displacement layer and a puddle displacement layer. The puddle displacement layer is capable of modifying the solid displacement layer.

As described herein, "puddle" is defined by an area of the wexel map where the Puddle value has been raised up by the presence of particles. The sampling process is represented in Figs. 19A-19C. A section of a wexel map is shown having seven adjacent wexels. The current Displacement values are represented by un-shaded rectangular bars **1910** of a given height (i.e., a given displacement for each wexel). In Fig. 19A, the particles **1920** are shown as round un-shaded dots colliding with the current Displacement levels and are piled up. In Fig. 19B, the "highest" particle heights **1930** are sampled at each wexel location. In Fig. 19C, the shaded rectangles **1940** show how much Puddle has been added on top of the Displacement as a result of the particles. The weld puddle height is not instantly set to the sampled values since Puddle is added at a particular liquification rate based on Heat. Although not shown in Figs. 19A-19C, it is possible to visualize the solidification process as the Puddle (shaded rectangles) gradually shrink and the Displacement (un-shaded rectangles) gradually grow from below to exactly take the place of the Puddle. In this manner, real-time molten metal fluidity characteristics are accurately simulated. As a user practices a particular welding process, the user is able to observe the molten metal fluidity characteristics and the heat dissipation characteristics of the weld puddle in real-time in virtual reality space and use this information to adjust or maintain his welding technique.

The number of wexels representing the surface of a welding coupon is fixed. Furthermore, the puddle particles that are generated by the simulation to model fluidity are temporary, as described herein. Therefore, once an initial puddle is generated in virtual reality space during a simulated welding process using the system **100,** the number of wexels plus puddle particles tends to remain relatively constant. This is because the number of wexels that are being processed is fixed and the number of puddle particles that exist and are being processed during the welding process tend to remain relatively constant because puddle particles are being created and "destroyed" at a similar rate (i.e., the puddle particles are temporary). Therefore, the processing load of the PPS **110** remains relatively constant during a simulated welding session.

In accordance with an alternate embodiment of the present invention, puddle particles may be generated within or below the surface of the welding coupon. In such an embodiment, displacement may be modeled as being positive or negative with respect to the original surface displacement of a virgin (i.e., un-welded) coupon. In this manner, puddle particles may not only build up on the surface of a welding coupon, but may also penetrate the welding coupon. However, the number of wexels is still fixed and the puddle particles being created and destroyed is still relatively constant.

In accordance with alternate embodiments of the present invention, instead of modeling particles, a wexel displacement map may be provided having more channels to model the fluidity of the puddle. Or, instead of modeling particles, a dense voxel map may be modeled. Or, instead of a wexel map, only particles may be modeled which are sampled and never go away. Such alternative embodiments may not provide a relatively constant processing load for the system, however.

Furthermore, in accordance with an embodiment of the present invention, blow-through or a keyhole is simulated by taking material away. For example, if a user keeps an arc in the same location for too long, in the real world, the material would burn away causing a hole. Such real-world burnthrough is simulated in the system **100** by wexel decimation techniques. If the amount of heat absorbed by a wexel is determined to be too high by the system **100,** that wexel may be flagged or designated as being burned away and rendered as such (e.g., rendered as a hole). Subsequently, however, wexel re-constitution may occur for certain welding processs (e.g., pipe welding) where material is added back after being initially burned away. In general, the system **100** simulates wexel decimation (taking material away) and wexel reconstitution (i.e., adding material back). Furthermore, removing material in root-pass welding is properly simulated in the system **100.**

Furthermore, removing material in root-pass welding is properly simulated in the system **100.** For example, in the real world, grinding of the root pass may be performed prior to subsequent welding passes. Similarly, system **100** may simulate a grinding pass that removes material from the virtual weld joint. It will be appreciated that the material removed may be modeled as a negative displacement on the wexel map. That is to say that the grinding pass removes material that is modeled by the system **100** resulting in an altered bead contour. Simulation of the grinding pass may be automatic, which is to say that the system **100** removes a predetermined thickness of material, which may be respective to the surface of the root pass weld bead.

In an alternative embodiment, an actual grinding tool, or grinder, may be simulated that turns on and off by activation of the mock welding tool **160** or another input device. It is noted that the grinding tool may be simulated to resemble a real world grinder. In this embodiment, the user maneuvers the grinding tool along the root pass to remove material responsive to the movement thereof. It will be understood that the user may be allowed to remove too much material. In a manner similar to that described above, holes or other defects (described above) may result if the user grinds away too much material. Still, hard limits or stops may be implemented, i.e. programmed, to prevent the user from removing too much material or indicate when too much material is being removed.

In addition to the non-visible "puddle" particles described herein, the system **100** also uses three other types of visible particles to represent Arc, Flame, and Spark effects, in accordance with an embodiment of the present invention. These types of particles do not interact with other particles of any type but interact only with the displacement map. While these particles do collide with the simulated weld surface, they do not interact with each other. Only Puddle particles interact with each other, in accordance with an embodiment of the present invention. The physics of the Spark particles is setup such that the Spark particles bounce around and are rendered as glowing dots in virtual reality space.

The physics of the Arc particles is setup such that the Arc particles hit the surface of the simulated coupon or weld bead and stay for a while. The Arc particles are rendered as larger dim bluish-white spots in virtual reality space. It takes many such spots superimposed to form any sort of visual image. The end result is a white glowing nimbus with blue edges.

The physics of the Flame particles is modeled to slowly raise upward. The Flame particles are rendered as medium sized dim red-yellow spots. It takes many such spots superimposed to form any sort of visual image. The end result is blobs of orange-red flames with red edges raising upward and fading out. Other types of non-puddle particles may be implemented in the system **100,** in accordance with other embodiments of the present invenntion. For example, smoke particles may be modeled and simulated in a similar manner to flame particles.

The final steps in the simulated visualization are handled by the vertex and pixel shaders provided by the shaders **117** of the GPUs **115.** The vertex and pixel shaders apply Puddle and Displacement, as well as surface colors and reflectivity altered due to heat, etc. The Extra (E) channel of the PHED wexel format, as discussed earlier herein, contains all of the extra information used per wexel. In accordance with an embodiment of the present invention, the extra information includes a non virgin bit (true=bead, false=virgin steel), a slag bit, an undercut value (amount of undercut at this wexel where zero equals no undercut), a porosity value (amount of porosity at this wexel where zero equals no porosity), and a bead wake value which encodes the time at which the bead solidifies. There are a set of image maps associated with different coupon visuals including virgin steel, slag, bead, and porosity. These image maps are used both for bump mapping and texture mapping. The amount of blending of these image maps is controlled by the various flags and values described herein.

A bead wake effect is achieved using a 1D image map and a per wexel bead wake value that encodes the time at which a given bit of bead is solidified. Once a hot puddle wexel location is no longer hot enough to be called "puddle", a time is saved at that location and is called "bead wake". The end result is that the shader code is able to use the 1D texture map to draw the "ripples" that give a bead its unique appearance which portrays the direction in which the bead was laid down. In accordance with an alternative embodiment of the present invention, the system **100** is capable of simulating, in virtual reality space, and displaying a weld bead having a real-time weld bead wake characteristic resulting from a real-time fluidity-to-solidification transition of the simulated weld puddle, as the simulated weld puddle is moved along a weld trajectory.

In accordance with an alternative embodiment of the present invention, the system 100 is capable of teaching a user how to troubleshoot a welding machine. For example, a troubleshooting mode of the system may train a user to make sure he sets up the system correctly (e.g., correct gas flow rate, correct power cord connected, etc.) In accordance with another alternate embodiment of the present invention, the system **100** is capable of recording and playing back a welding session (or at least a portion of a welding session, for example, N frames). A track ball may be provided to scroll through frames of video, allowing a user or instructor to critique a welding session. Playback may be provided at selectable speeds as well (e.g., full speed, half speed, quarter speed). In accordance with an embodiment of the present invention, a split-screen playback may be provided, allowing two welding sessions to be viewed side-by-side, for example, on the ODD **150.** For example, a "good" welding session may be viewed next to a "poor" welding session for comparison purposes.

In accordance with certain embodiments, the display of virtual reality elements in a stereoscopic 3D transmission format is provided. Stereoscopy (3D imaging) is a technique for generating or improving the perception of depth in an image by means of stereopsis for binocular vision. Stereoscopic methods often present two offset images, separately, to the right eye and the left eye of a person viewing the images. The brain of the person tends to combine the images, which are two-dimensional images, to provide the illusion of three-dimensional depth. Stereoscopic methods differ from simple 3D methods that simply display an image in three full dimensions. Stereoscopic methods allow the viewing person to observe more information about the 3-dimensional objects being displayed by moving their eyes and/or head. Many stereoscopic techniques require a user to wear 3D eyewear such as active or passive 3D glasses. However, the auto-stereoscopy technique allows for the displaying and viewing of stereoscopic images without the use of any 3D eyewear by the user.

One embodiment provides a system including a programmable processor-based subsystem configured to generate simulation data corresponding to a virtual weldment generated in real time in virtual reality space. The system also includes a 3D conversion unit operatively connected to the programmable processor-based subsystem and configured to convert at least a portion of the simulation data, representative of at least a portion of the virtual weldment, to 3D data in a stereoscopic 3D transmission format. The system further includes a 3D display-facilitating device operatively connected to the 3D conversion unit and configured to receive the 3D data from the 3D conversion unit and facilitate displaying of a stereoscopic representation of the 3D data. The 3D display-facilitating device may be a 3D projector or a 3D television set, for example. A weld bead portion of the virtual weldment may result from a simulated weld puddle having real-time molten metal fluidity and heat dissipation characteristics providing a real-time fluidity-to-solidification transition of the simulated weld puddle as the simulated weld puddle is moved to form the weld bead portion of the virtual weldment. The system may also include a display screen operatively connected to the 3D display-facilitating device and configured to display the stereoscopic representation of the 3D data, and 3D eyewear configured to be worn by a user to view the representation of the stereoscopic 3D data on the display screen as a 3D image in 3D space. The system may further include a 3D user interface operatively interfacing to the 3D display-facilitating device and configured to allow a user to manipulate a spatial orientation of the stereoscopic representation of the 3D data on the display screen. The simulation data may be representative of at least a cross-sectional portion of the virtual weldment.

One embodiment provides a method including generating simulation data corresponding to a simulated weld bead generated in real time, in virtual reality space, having real-time weld bead wake characteristics. The simulation data may be representative of at least a cross-sectional portion of the simulated weld bead. The method also includes converting the simulation data, representative of the weld bead, to 3D data in a stereoscopic 3D transmission format, and displaying a stereoscopic representation of the 3D data. The simulated weld bead may result from a simulated weld puddle having real-time molten metal fluidity and heat dissipation characteristics providing a real-time fluidity-to-solidification transition of the simulated weld puddle as the simulated weld puddle is moved to form the simulated weld bead. Displaying the stereoscopic representation of the 3D data may include projecting the stereoscopic representation of the 3D data onto a display screen. Displaying the stereoscopic representation of the 3D data may include displaying the stereoscopic representation of the 3D data on a display screen of a 3D television set. The method may further include viewing the displayed stereoscopic representation of the 3D data by using 3D eyewear configured to be worn by a user. The method may also include manipulating a spatial orientation of the displayed stereoscopic representation of the 3D data.

One embodiment provides a method including generating simulation data corresponding to a virtual welding environment in virtual reality space. The method also includes converting a portion of the simulation data, representative of a portion of the virtual welding environment, to 3D data in a stereoscopic 3D transmission format, and displaying a stereoscopic representation of the 3D data. The portion of the virtual welding environment may include one or more of a simulated welding electrode (e.g., stick or wire), a simulated welding tool, a simulated weldment, or a simulated welding coupon. The method may further include manipulating a spatial orientation of the displayed stereoscopic representation of the 3D data. The method may also include viewing the displayed stereoscopic representation of the 3D data by using 3D eyewear configured to be worn by a user. Alternatively, the stereoscopic 3D transmission format may be an auto-stereoscopic format where 3D eyewear is not used for viewing.

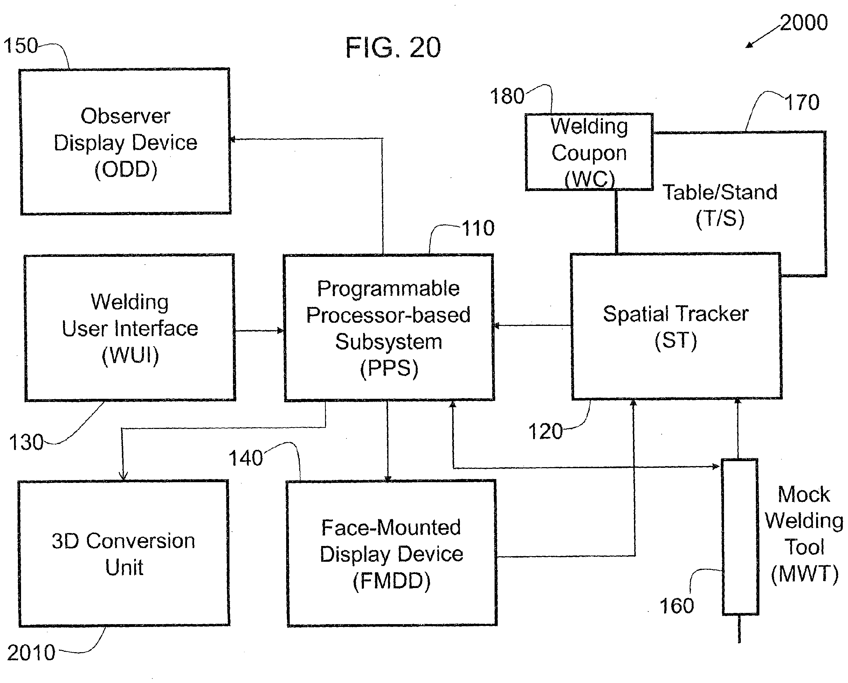

Fig. 20 illustrates a second example embodiment of a system block diagram of a system **2000** providing arc welding training in a real-time virtual reality environment. The system **2000** is similar to the system **100** of Fig. 1. However, the system **2000** includes a 3D conversion unit **2010** operatively connected to the PPS **110.** The 3D conversion unit **2010** is configured to receive simulation data from the PPS **110** and convert the simulation data to 3D data being in a stereoscopic 3D transmission format.

The simulation data may be representative of any portion of a simulated virtual reality welding environment including, for example, a simulated weldment, a simulated weld bead, a simulated welding electrode (e.g., stick or wire), a simulated welding tool (e.g., gun or torch), or a simulated welding coupon. For example, a cross-sectional portion of a simulated weldment or weld bead allows a user to see inside a virtual weld to check for internal defects. In accordance with an embodiment, a user may use the welding user interface **130** to select which portion of a virtual welding environment to convert to 3D data. The stereoscopic 3D transmission format allows a user to view a selected portion of the virtual welding environment, presented on a display screen, as a 3D image appearing in 3D space. Examples of types of stereoscopic 3D transmission formats are frame sequential, frame packing, side-by-side, and checkerboard. Other transmission formats are possible as well, in accordance with other embodiments.

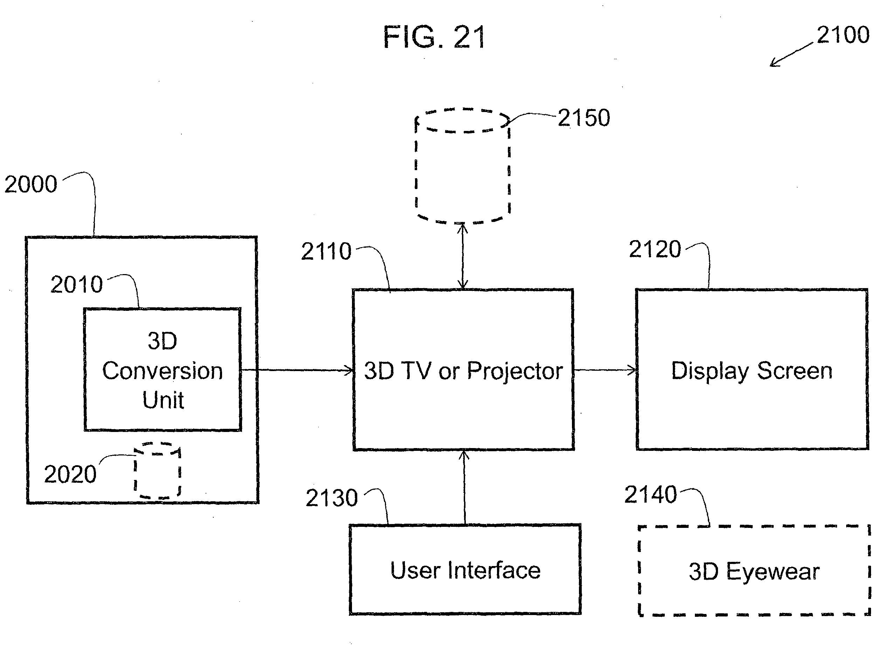

Fig. 21 illustrates an example embodiment of a system block diagram of a system **2100** providing stereoscopic 3D viewing of virtual elements generated as part of a virtual welding environment using the system **2000** of Fig. 20. The system **2100** includes the system **2000** of Fig. 20, a 3D display-facilitating device (e.g., a 3D television or a 3D projector) **2110** operatively connected to the system **2000,** a display screen **2120** operatively connected to the 3D display-facilitating device **2110,** and a user interface **2130.**

The 3D data from the 3D conversion unit **2010** of the system **2000** may be transmitted to the 3D display-facilitating device **2110** in a stereoscopic 3D transmission format. The 3D display-facilitating device **2110** receives the 3D data and provides a stereoscopic representation of the 3D data to the display screen **2120** for displaying (e.g., via projection). If the stereoscopic 3D transmission format is an auto-stereoscopic format, then a user may view the representation of the stereoscopic 3D data on the display screen **2120** as a 3D image appearing in 3D space without the aid of 3D eyewear (e.g., 3D glasses). Otherwise, the system **2100** may include a set of 3D eyewear **2140** configured to be worn by a user to view the representation of the stereoscopic 3D data on the display screen **2120** as a 3D image appearing in 3D space. The 3D eyewear may be of the passive type or the active type, depending on the configuration of the 3D television or 3D projector.

The user interface **2130** allows a welding student or instructor to manipulate or change the spatial orientation of the 3D data on the display screen. As a result, a welding student or instructor viewing in stereoscopic 3D, for example, the results of a virtual weldment created by the student using the system of Fig. 21 may have a better understanding of what he is viewing, increase his comprehension, and retain what he has learned more effectively over time. The 3D user interface **2130** may include, for example, one or more of a keyboard, a computer mouse, a joy stick, or a track ball.

In accordance with an embodiment, the 3D data generated by the 3D conversion unit may be in the form of static 3D frames or dynamic 3D video. For example, a welding instructor may be able to view a virtual welding gun in relation to a virtual weldment in 3D as created during a virtual welding session by a welding student and recorded by the system **2100.** In this manner, the welding instructor may replay and view the recorded welding session in 3D, observing how the student positioned and moved the welding gun to create the virtual weld. In accordance with an embodiment, the user interface **2130** may provide measurement tools, allowing a user to make measurements of regions of interest of a displayed 3D image. Furthermore, the user interface **2130** may allow a user to segment a region of the displayed 3D image and enlarge the segmented region for better viewing.

In accordance with an embodiment, the system **2100** may store a library of 3D formatted images and/or videos showing, for example, various types of welds and welding techniques created using the system **2000,** blueprints, welding coupons, or other instructional images or videos which may be more easily visualized in 3D using the system **2100.** For example, the system **2000** or the system **2100** may include a storage device **2020** or **2150** (e.g., a hard drive or a database subsystem) configured to store the 3D formatted information.

While the invention has been described with reference to certain embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiment disclosed, but that the invention will include all embodiments falling within the scope of the appended claims.

**REFERENCE NUMBERS**

| | | | |
|---|---|---|---|
| 100 | system | 135 | console |
| 110 | processor-based subsystem | 136 | knob |
| 111 | central processing unit | 137 | knob |
| 115 | graphic processing unit | 140 | face-mounted display device |
| 116 | compute unified device architecture | 150 | observer display device |
| | | 151 | welding parameters |
| 117 | shader | 152 | welding discontinuity state |
| 118 | video output | 153 | selection |
| 119 | video output | 160 | mock welding tool |
| 120 | spatial tracker | 161 | holder |
| 121 | magnetic source | 162 | electrode |
| 122 | sensor | 163 | tip |
| 123 | disk | 170 | table/stand |
| 124 | power source | 171 | table |
| 125 | cable | 172 | stand / base |
| 126 | tracking unit | 173 | arm |
| 130 | welding user interface | 174 | vertical post |
| 131 | set of buttons | 175 | welding coupon |
| 132 | joystick | 175' | pipe |
| 133 | knob | 175" | pipe |
| 134 | knob | 176 | root |
| 177 | portion | 1218 | 3D texture |
| 180 | welding coupon | 1219 | visual cues functionality |
| 900 | welding helmet | 1220 | scoring and tolerance functionality |
| 910 | earbud speaker | 1221 | tolerance editor |
| 1201 | physical interface | 1222 | special effect module |
| 1202 | clamp model | 1300 | method |
| 1203 | environment model | 1310 | step |
| 1204 | sound content functionality | 1320 | step |
| 1205 | welding sound | 1330 | step |
| 1206 | stand/table model | 1340 | step |
| 1207 | internal architecture functionality | 1350 | step |
| 1208 | calibration functionality | 1400 | welding coupon |
| 1210 | coupon model | 1410 | surface |
| 1211 | welding physics | 1420 | wexel map |
| 1212 | internal physics adjustment tool / tweaker | 1421 | wexel |
| | | 1600 | welding coupon |
| 1213 | graphical user interface functionality | 1610 | surface |
| 1214 | graphing functionality | 1620 | surface |
| 1215 | student reports functionality | 1700 | welding coupon |
| 1216 | renderer | 1701 | pipe piece |
| 1217 | bead rendering | 1702 1703 | pipe piece root joint |
| 1704 | piece | 2130 | user interface |
| 1710 | surface | 2140 | eyewear |
| 1910 | un-shaded rectangular bar | O | /point / coupon spaceX point /coupon space |
| 1920 | particle | Y | point / coupon space |
| 1930 | particle height | Z | point / coupon space |
| 1940 | shaded rectangle | S | texture coordinate |
| 2000 | system | T | texture coordinate |
| 2010 | conversion unit | B | point |
| 2100 | system | E | point |
| 2110 | display-facilitating device | U | texture coordinate |
| 2120 | display screen | V | texture coordinate |

## Claims

1. A system (100, 2000, 2100) comprising:
a programmable processor-based subsystem (110) configured to generate simulation data corresponding to a virtual weldment generated in real time in virtual reality space, and a 3D display-facilitating device (2110) operatively connected to a 3D conversion unit (2010) and configured to receive the 3D data from the 3D conversion unit and facilitate displaying of a stereoscopic representation of the 3D data, in a stereoscopic display format in real time, wherein
the three-dimensional (3D) conversion unit (2010) is operatively connected to the programmable processor-based subsystem (110) and configured to convert at least a portion of the simulation data, representative of at least a portion of the virtual weldment, to 3D data in a stereoscopic 3D transmission format; in real time, and
wherein a weld bead portion of the virtual weldment results from a simulated weld puddle having real-time molten metal fluidity and heat dissipation characteristics providing a real-time fluidity-to-solidification transition of the simulated weld puddle as the simulated weld puddle is moved to form the weld bead portion of the virtual weldment, **characterized in that** the 3D display facilitating device comprises a 3D projector, and/or a 3D television set, and that the system further comprises:
a display screen (2120) operatively connected to the 3D display-facilitating device (2110) and configured to display the stereoscopic representation of the 3D data; and
3D eyewear (2140) configured to be worn by a user to view the representation of the stereoscopic 3D data on the display screen (2120) as a 3D image in 3D space, wherein stereoscopic 3D transmission format includes one of frame sequential, frame parching, side-by-side, or checkerboard formats.

2. The system of claim 1, **characterized in that** the system further comprises a 3D user interface (130, 2130) operatively interfacing to the 3D display-facilitating device (2110) and configured to allow a user to manipulate a spatial orientation of the stereoscopic representation of the 3D data on the display screen (2120).

3. The system (100, 2000, 2100) of claims 1 or 2, **characterized in that** the simulation data is representative of at least a cross-sectional portion of the virtual weldment.

4. A method comprising:
generating simulation data corresponding to a simulated weld bead generated in real time, in virtual reality space, having real-time weld bead wake characteristics and
displaying a stereoscopic representation of the 3D data in real time, **characterized in**
converting the simulation data, representative of the weld bead, to 3D data in a stereoscopic 3D transmission format in real time,
wherein the simulated weld bead results from a simulated weld puddle having real-time molten metal fluidity and heat dissipation characteristics providing a real-time fluidity-to-solidification transition of the simulated weld puddle as the simulated weld puddle is moved to form the simulated weld bead.
wherein the stereoscopic 3D transmission format includes one of frame sequential, frame parching, side-by-side, or checkerboard formats
wherein displaying the stereoscopic representation of the 3D data including projecting the stereoscopic representation of the 3D data onto a display screen, and/or on a display screen of a 3D television set.

5. The method of claim 4, **characterized in** the simulation data being representative of at least a cross-sectional portion of the simulated weld bead.

6. A method of any of the claims 4 to 5, **characterized in that** the method further comprises: generating simulation data corresponding to a virtual welding environment in virtual reality space;

7. The method of any of the claims 4 to 6, **characterized in** the portion of the virtual welding environment including one or more of a simulated welding electrode, a simulated welding tool, a simulated weldment, or a simulated welding coupon.

8. The method of any of the claims 4 to 7, **characterized in that** the method further comprises manipulating a spatial orientation of the displayed stereoscopic representation of the 3D data.

9. The method of any of the claims 4 to 8, **characterized in that** the method further comprises viewing the displayed stereoscopic representation of the 3D data by using 3D eyewear configured to be worn by a user.

10. The method of any of the claims 4 to 9, **characterized in** the stereoscopic 3D transmission format being an auto-stereoscopic format.

## Patentansprüche

1. System (100, 2000, 2100), das umfasst:
ein programmierbares prozessorgestütztes Teilsystem (110), das dafür konfiguriert ist, Simulationsdaten zu generieren, die einer virtuellen Schweißkonstruktion entsprechen, die in Echtzeit in einem Raum der virtuellen Realität generiert wird, und eine 3D-Anzeigeermöglichungsvorrichtung (2110), die mit einer 3D-Konvertierungseinheit (2010) wirkverbunden und dafür konfiguriert ist, die 3D-Daten von der 3D-Konvertierungseinheit zu empfangen und das Anzeigen einer stereoskopischen Darstellung der 3D-Daten in einem stereoskopischen Anzeigeformat in Echtzeit zu ermöglichen, wobei
die dreidimensionale (3D-) Konvertierungseinheit (2010) mit dem programmierbaren prozessorgestützten Teilsystem (110) wirkverbunden und dafür konfiguriert ist, mindestens einen Abschnitt der Simulationsdaten, die mindestens einen Abschnitt der virtuellen Schweißkonstruktion darstellen, in 3D-Daten in einem stereoskopischen 3D-Übertragungsformat in Echtzeit zu konvertieren, und
wobei ein Schweißraupenabschnitt der virtuellen Schweißkonstruktion aus einer simulierten Schweißpfütze resultiert, die Echtzeit-Fluditäts- und-Wärmedissipationseigenschaften von schmelzflüssigem Metall aufweist, was einen Echtzeit-Übergang von Fluidität zu Verfestigung der simulierten Schweißpfütze bereitstellt, während die simulierte Schweißpfütze bewegt wird, um den Schweißraupenabschnitt der virtuellen Schweißkonstruktion zu bilden, **dadurch gekennzeichnet, dass** die 3D-Anzeigeermöglichungsvorrichtung einen 3D-Projektor und/oder ein 3D-Fernsehgerät umfasst, und dass das System des Weiteren umfasst:
einen Anzeigeschirm (2120), der mit der 3D-Anzeigeermöglichungsvorrichtung (2110) wirkverbunden und dafür konfiguriert ist, die stereoskopische Darstellung der 3D-Daten anzuzeigen; und
eine 3D-Brille (2140), die dafür konfiguriert ist, von einem Benutzer getragen zu werden, um die Darstellung der stereoskopischen 3D-Daten auf dem Anzeigeschirm (2120) als ein 3D-Bild im 3D-Raum zu betrachten, wobei das stereoskopische 3D-Übertragungsformat eines der Formate "Frame-Sequential", "Frame-Parching", "Side-by-Side" und "Checkerboard" umfasst.

2. System nach Anspruch 1, **dadurch gekennzeichnet, dass** das System des Weiteren eine 3D-Benutzerschnittstelle (130, 2130) umfasst, die mit der 3D-Anzeigeermöglichungsvorrichtung (2110) wirkverbunden und dafür konfiguriert ist, es einem Benutzer zu erlauben, eine räumliche Ausrichtung der stereoskopischen Darstellung der 3D-Daten auf dem Anzeigeschirm (2120) zu manipulieren.

3. System (100, 2000, 2100) nach Anspruch 1 oder 2, **dadurch gekennzeichnet, dass** die Simulationsdaten für mindestens einen Querschnittsabschnitt der virtuellen Schweißkonstruktion repräsentativ sind.

4. Verfahren, das umfasst:
Generieren von Simulationsdaten, die einer simulierten Schweißraupe entsprechen, die in Echtzeit im Raum der virtuellen Realität generiert wird und Echtzeit-Schweißraupenwelleneigenschaften aufweist, und Anzeigen einer stereoskopischen Darstellung der 3D-Daten in Echtzeit,
**gekennzeichnet durch**:
Konvertieren der Simulationsdaten, die die Schweißraupe darstellen, in 3D-Daten in einem stereoskopischen 3D-Übertragungsformat in Echtzeit,
wobei die simulierte Schweißraupe aus einer simulierten Schweißpfütze resultiert, die Echtzeit-Fluditäts- und -Wärmedissipationseigenschaften von schmelzflüssigem Metall aufweist, was einen Echtzeit-Übergang von Fluidität zu Verfestigung der simulierten Schweißpfütze bereitstellt, während die simulierte Schweißpfütze bewegt wird, um die simulierte Schweißraupe zu bilden,
wobei das stereoskopische 3D-Übertragungsformat eines der Formate "Frame-Sequential", "Frame-Parching", "Side-by-Side" und "Checkerboard" umfasst,
wobei das Anzeigen der stereoskopischen Darstellung der 3D-Daten das Projizieren der stereoskopischen Darstellung der 3D-Daten auf einen Anzeigeschirm und/oder auf einen Bildschirm eines 3D-Fernsehers enthält.

5. Verfahren nach Anspruch 4, **dadurch gekennzeichnet, dass**
die Simulationsdaten für mindestens einen Querschnittsabschnitt der simulierten Schweißraupe repräsentativ sind.

6. Verfahren nach einem der Ansprüche 4 und 5, **dadurch gekennzeichnet, dass**
wobei das Verfahren des Weiteren umfasst:
Generieren von Simulationsdaten, die einer virtuellen Schweißumgebung im Raum der virtuellen Realität entsprechen.

7. Verfahren nach einem der Ansprüche 4 bis 6, **dadurch gekennzeichnet, dass**
der Abschnitt der virtuellen Schweißumgebung eines oder mehrere von einer simulierten Schweißelektrode, einem simulierten Schweißwerkzeug, einer simulierten Schweißkonstruktion und einem simulierten Schweißstück enthält.

8. Verfahren nach einem der Ansprüche 4 bis 7, **dadurch gekennzeichnet, dass**
das Verfahren des Weiteren das Manipulieren einer räumlichen Ausrichtung der angezeigten stereoskopischen Darstellung der 3D-Daten umfasst.

9. Verfahren nach einem der Ansprüche 4 bis 8, **dadurch gekennzeichnet, dass**
dass das Verfahren des Weiteren das Betrachten der angezeigten stereoskopischen Darstellung der 3D-Daten unter Verwendung einer 3D-Brille umfasst, die dafür konfiguriert ist, von einem Benutzer getragen zu werden.

10. Verfahren nach einem der Ansprüche 4 bis 9, **dadurch gekennzeichnet, dass**
das stereoskopische 3D-Übertragungsformat ein autostereoskopisches Format ist.

## Revendications

1. Système (100, 2000, 2100) comprenant :
un sous-système basé sur processeur programmable (110) configuré pour générer des données de simulation correspondant à un ensemble soudé virtuel généré en temps réel dans un espace de réalité virtuelle, et un dispositif de facilitation d'affichage 3D (2110) relié opérationnellement à une unité de conversion 3D (2010) et configuré pour recevoir les données 3D depuis l'unité de conversion 3D et faciliter l'affichage d'une représentation stéréoscopique des données 3D dans un format d'affichage stéréoscopique en temps réel, dans lequel
l'unité de conversion tridimensionnelle (3D) (2010) est reliée opérationnellement au sous-système basé sur processeur programmable (110) et configurée pour convertir au moins une portion des données de simulation, représentatives d'au moins une portion de l'ensemble soudé virtuel, en données 3D dans un format de transmission 3D stéréoscopique, en temps réel ; et
dans lequel une portion de cordon de soudage de l'ensemble soudé virtuel découle d'un bain de fusion simulé ayant des caractéristiques de fluidité de métal fondu et de dissipation de chaleur en temps réel fournissant une transition de fluidité à solidification en temps réel du bain de fusion simulé au fur et à mesure du déplacement du bain de fusion simulé pour former la portion de cordon de soudage de l'ensemble soudé virtuel, **caractérisé en ce que** le dispositif de facilitation d'affichage 3D comprend un projecteur 3D, et/ou un téléviseur 3D, et **en ce que** le système comprend en outre :
un écran d'affichage (2120) relié opérationnellement au dispositif de facilitation d'affichage 3D (2110) et configuré pour afficher la représentation stéréoscopique des données 3D ; et
des lunettes 3D (2140) configurées pour être portées par un utilisateur pour visualiser la représentation des données 3D stéréoscopiques sur l'écran d'affichage (2120) sous la forme d'une image 3D dans un espace 3D, dans lequel le format de transmission 3D stéréoscopique inclut l'un parmi un format séquentiel de trames, un format de dessèchement de trames, un format côte à côte et un format en damier.

2. Système selon la revendication 1, **caractérisé en ce que** le système comprend en outre une interface utilisateur 3D (130, 2130) opérationnellement en interface avec le dispositif de facilitation d'affichage 3D (2110) et configurée pour permettre à un utilisateur de manipuler une orientation spatiale de la représentation stéréoscopique des données 3D sur l'écran d'affichage (2120) .

3. Système (100, 2000, 2100) selon la revendication 1 ou 2, **caractérisé en ce que** les données de simulation sont représentatives d'au moins une portion en coupe transversale de l'ensemble soudé virtuel.

4. Procédé comprenant :
la génération de données de simulation correspondant à un cordon de soudage simulé généré en temps réel, dans un espace de réalité virtuelle, ayant des caractéristiques de sillage de cordon de soudage en temps réel, et
l'affichage d'une représentation stéréoscopique des données 3D en temps réel, **caractérisé par**
la conversion des données de simulation, représentatives du cordon de soudage, en données 3D dans un format de transmission 3D stéréoscopique en temps réel,
dans lequel le cordon de soudage simulé découle d'un bain de fusion simulé ayant des caractéristiques de fluidité de métal fondu et de dissipation de chaleur en temps réel fournissant une transition de fluidité à solidification en temps réel du bain de fusion simulé au fur et à mesure du déplacement du bain de fusion simulé pour former le cordon de soudage simulé,
dans lequel le format de transmission 3D stéréoscopique inclut l'un parmi un format séquentiel de trames, un format de dessèchement de trames, un format côte à côte et un format en damier,
dans lequel l'affichage de la représentation stéréoscopique des données 3D inclut la projection de la représentation stéréoscopique des données 3D sur un écran d'affichage, et/ou
sur un écran d'affichage d'un téléviseur 3D.

5. Procédé selon la revendication 4, **caractérisé en ce que** les données de simulation sont représentatives d'au moins une portion en coupe transversale du cordon de soudage simulé.

6. Procédé selon la revendication 4 ou 5, **caractérisé en ce que** le procédé comprend en outre :
la génération de données de simulation correspondant à un environnement de soudage virtuel dans un espace de réalité virtuelle.

7. Procédé selon l'une quelconque des revendications 4 à 6, **caractérisé en ce que** la portion de l'environnement de soudage virtuel inclut un ou plusieurs parmi une électrode de soudage simulée, un outil de soudage simulé, un ensemble soudé simulé, ou un coupon de soudage simulé.

8. Procédé selon l'une quelconque des revendications 4 à 7, **caractérisé en ce que** le procédé comprend en outre la manipulation d'une orientation spatiale de la représentation stéréoscopique affichée des données 3D.

9. Procédé selon l'une quelconque des revendications 4 à 8, **caractérisé en ce que** le procédé comprend en outre la visualisation de la représentation stéréoscopique affichée des données 3D en utilisant des lunettes 3D configurées pour être portées par un utilisateur.

10. Procédé selon l'une quelconque des revendications 4 à 9, **caractérisé en ce que** le format de transmission 3D stéréoscopique est un format autostéréoscopique.
